# EUROPÄISCHE PATENTSCHRIFT

(11) **EP 1 995 987 B1**
(45) Veröffentlichungstag und Bekanntmachung des Hinweises auf die Patenterteilung: **01.01.2014**
(21) Anmeldenummer: 08156861.0
(22) Anmeldetag: 23.05.2008
(51) Int. Cl.: H04W 64/00, H04L 29/08, G01S 5/02

(54) **Mobiles multimediales Informationssystem**
Mobile multimedia information system
Système d'informations multimédia mobile

(30) Priorität: 24.05.2007 DE 102007024257
(43) Veröffentlichungstag der Anmeldung: 26.11.2008
(73) Patentinhaber: Lesswire AG, 12489 Berlin (DE)
(72) Erfinder: Meyfarth, Ralph, 15732, Eichwalde (DE); Bölicke, Anja, 15234, Frankfurt (Oder) (DE); Mahlig, Matthias, 10439, Berlin (DE)
(74) Vertreter: Eisenführ Speiser

(56) Entgegenhaltungen:
- WO-A1-01/44831
- US-A1- 2003 217 179
- US-A1- 2007 001 904
- LAURI AALTO ET AL: "Bluetooth and WAP Push Based Location-Aware Mobile Advertising System", MOBISYS 2004. THE 2ND INTERNATIONAL CONFERENCE ON MOBILE SYSTEMS, APPLICATIONS AND SERVICES. BOSTON, MA, JUNE 6 - 9, 2004; [INTERNATIONAL CONFERENCE ON MOBILE SYSTEMS, APPLICATIONS AND SERVICES], NEW YORK, NY : ACM, US, 6. Juni 2004 (2004-06-06), XP007910617, ISBN: 978-1-58113-793-4
- KRAEMER R: "Bluetooth based wireless internet applications for indoor hotspots: experience of a successful experiment during CeBIT 2001", LOCAL COMPUTER NETWORKS, 2001. PROCEEDINGS. LCN 2001. 26TH ANNUAL IEEE CONFERENCE ON 14-16 NOV. 2001, PISCATAWAY, NJ, USA,IEEE, 14. November 2001 (2001-11-14), Seiten 518-524, XP010584075, ISBN: 978-0-7695-1321-8

## Beschreibung

### Gebiet der Erfindung

Die vorliegende Erfindung bezieht sich auf ein Ortungssystem, ein Verfahren zum Orten und eine ortsfeste Sende-Empfangsvorrichtung und ein Computerprogrammprodukt zur Ortung von mobilen Sende-/Empfangsgeräten.

### Hintergrund der Erfindung

Durch die preiswerte Verfügbarkeit von tragbaren Geräten mit drahtloser Datenschnittstelle hat sich eine große Nachfrage an Positionsbestimmungsgeräten entwickelt, um Benutzern sowohl ihren Standort mitzuteilen, wie bei Navigationssystemen, oder vom Standort abhängige Inhalte zur Verfügung zu stellen, wie die Positionen von Objekten, welche für den Benutzer von Interesse sein können. Solche Inhalte können auch Informationen zu Attraktionen in Vergnügungsparks oder im Rahmen von ganzen Museumsführern zusammengestellte Informationen sein. Durch den Geschwindigkeitszuwachs in der drahtlosen Informationsübertragung werden auch mehr und mehr multimediale Inhalte zur Verfügung gestellt, welche größere Bandbreiten erfordern. Die drahtlosen Informationsübertragungstechnologien reichen von Technologien kurzer Reichweite wie IrDA (Infrarotdatenübertragung) oder Bluetooth über Technologien mittlerer Reichweite wie WLAN an sogenannten Hot-Spots zu zellulären großflächigen Netzen wie UMTS.

Die Positionsbestimmungssysteme lassen sich nach ihrer Positionsgenauigkeit und ihrer Reichweite einteilen. Sie reichen von global Verfügbaren Systemen wie GPS zu Systemen mit sehr geringer Reichweite wie RFID-Transpondern.

Die US 7 155 238 beschreibt ein Ortungssystem für bewegte drahtlose Identifikationseinheiten, sogenannten "tags", durch andere bewegte Sende-/Empfangsgeräte, wie Mobiltelefone mittels einer Nahbereichsfunktechnologie. Ein Kontrollzentrum, z.B. innerhalb des Mobilfunknetzes, sendet an die Mobiltelefone eine Anfrage nach einer bestimmten Identifikationseinheit anhand ihrer Identifikationsnummer. Dann versuchen die Mobiltelefone eine Kommunikation mit der entsprechenden Identifikationseinheit aufzubauen. Sobald die Identifikationseinheit in den Empfangsbereich der Nahbereichsfunktechnologie eines Mobiltelefons kommt baut es eine Kommunikation mit der Identifikationseinheit auf. Daraufhin sendet das Mobiltelefon eine Nachricht mit der Identifikationsnummer und dem momentanen Aufenthaltsort des Mobiltelefons über das Mobilfunknetz an das Kontrollzentrum. Die Mobiltelefone bestimmen ihre Position dabei über ein Satellitenortungssystem wie GPS oder ihre momentane Mobilfunknetzzelle.

Alternativ kann eine Identifikationseinheit ständig Anfragen aussenden. Wenn ein Mobiltelefon in den Empfangsbereich der Identifikationseinheit kommt, bestimmt es seine Position und sendet die Identifikationsnummer, Position und ggf. die Zeit an das Kontrollzentrum.

Dieses Ortungssystem eignet sich für die Verfolgung von Identifikationseinheiten auf dem gesamten Globus, wobei eine Funktechnologie geringer Reichweite mit den Vorteilen einer Funktechnologie großer Reichweite und einer Satellitenortungstechnologie kombiniert werden. Es eignet sich nicht für die genaue Positionsbestimmung z.B. innerhalb eines Gebäudes, weil die Ortung auf mobilen Stationen wie Mobiltelefonen basiert, welche ihre Position nur ungenau über das Satellitenortungssystem bestimmen können.

Die US 7 096 030 beschreibt die Bestimmung von Positionen mit einem mobilen Gerät durch Bestimmung der Mobilfunkzelle oder durch Empfang von Nahbereichsfunkfeuern durch das mobile Gerät. Die Position kann dann im mobilen Gerät abgespeichert werden und bestimmte Aktionen, welche an diesen Positionen durchgeführt werden sollen, können im mobilen Gerät definiert werden. Zu diesen Aktionen gehört das Anzeigen bestimmter Informationen auf dem mobilen Gerät. Der Benutzer muss jedoch die Aktionen oder die Informationen selbst eingeben.

US 2003/217179 A1 offenbart in einem Ausführungsbeispiel ein System mit zwei Sende-Empfangsgeräten, die jeweils ein erstes Funkmodul für eine erste Funktechnologie vergleichsweise geringer Reichweite und ein zweites Funkmodul für eine zweite Funktechnologie vergleichsweise hoher Reichweite aufweisen. In einem weiteren Ausführungsbeispiel wird ein Sende-Empfangsgerät mit lediglich einem ersten Funkmodul und ein Sende-Empfangsgerät mit einem ersten und zweiten Funkmodul beschrieben, wobei das Sende-Empfangsgerät mit lediglich einem ersten Funkmodul, einen das Sende-Empfangsgerät mit einem ersten und zweiten Funkmodul charakterisierenden Identifikationskode nach Anfrage von einem Server erhält.

WO 01/44831 A1 zeigt ein System und ein Verfahren zur Bereitstellung lokaler Informationen für ein Mobiltelefon, wobei an dem Mobiltelefon ein Modul mit einem Empfänger und einem Prozessor angeschlossen ist und mehrere zur Übermittlung eines eindeutigen Codes an das Modul ausgebildete Sender mit geringer Sendeleistung an verschiedenen vorgegebenen Positionen angeordnet sind, wobei ein jeweiliger Code mit positionsspezifischen Informationen, die in einem zentralen Kontrollsystem abgelegt sind, assoziiert ist. Empfängt ein Modul einen jeweiligen Code, leitet es diesen über das Mobiltelefon zu dem zentralen Kontrollsystem weiter und erhält daraufhin die positionsspezifischen Informationen.

Es sind auch Mobiltelefone bekannt, welche Informationen, wie die Adressen von Restaurants auf einer Karte anzeigen, abhängig vom Standort des Mobiltelefons. Die Informationen werden dabei meist durch Datendienste aus dem Internet abgerufen, und die Position mittels GPS ermittelt. Die genaue Position z.B. innerhalb eines Gebäudes können diese Geräte nicht ermitteln.

Es ist daher Aufgabe der Erfindung ein genaueres Ortungssystem insbesondere für die Verwendung in Gebäuden vorzustellen.

### Offenlegung der Erfindung

Es wäre für viele Anwendungen sinnvoll bestimmte ortsabhängige Inhalte für mobile Geräte zur Verfügung zu stellen.

Die technische Aufgabe wird erfindungsgemäß durch ein Ortungssystem zum Bestimmen einer Position mindestens eines mobilen Sende-Empfangsgeräts gelöst, wobei das Ortungssystem neben dem mobilen Sende-Empfangsgerät mindestens ein ortsfestes Sende-Empfangsgerät, welches ausgebildet ist, im Betrieb an einem vorbestimmten Ort zu sein, enthält,

Erfindungsgemäß enthalten sowohl das ortsfeste als auch das mobile Sende-Empfangsgerät sowohl ein erstes Funkmodul für eine erste Funktechnologie vergleichsweise geringer Reichweite als auch ein zweites Funkmodul für eine zweite Funktechnologie vergleichsweise hoher Reichweite und eine Steuereinheit, die mit den Funkmodulen verbunden ist, und sind ausgebildet, sowohl über die erste Funktechnologie als auch über die zweite Funktechnologie zu kommunizieren.

Das ortsfeste Sende-Empfangsgerät ist dabei ausgebildet, mit der ersten Funktechnologie kontinuierlich Abfragesignale zur Abfrage eines jeweiligen Identifikationskodes des mobilen Sende-Empfangsgeräts auszusenden.

Das mobile Sende-Empfangsgerät ist hierfür ausgebildet, die Abfragesignale zu empfangen und
unmittelbar nach Empfang mindestens eines Abfragesignals einen das mobile Sende-Empfangsgerät charakterisierenden Identifikationskode mit der ersten Funktechnologie zu senden.

Das ortsfeste Sende-Empfangsgerät ist dabei ausgebildet, den Identifikationskode mit der ersten Funktechnologie zu empfangen und nach dem Empfang des Identifikationskodes des mobilen Sende- Empfangsgeräts mindestens einen das ortsfeste Sende-Empfangsgerät charakterisierenden Identifikationskode mit der zweiten Funktechnologie logisch an das mobile Sende-Empfangsgerät zu übertragen.

Dies hat den technischen Vorteil, dass das mobile Sende-Empfangsgerät immer wenn es in den Empfangsbereich des ortsfesten Sende-Empfangsgeräts kommt diese Tatsache über den Empfang des das ortsfeste Sende-Empfangsgerät charakterisierenden Identifikationskodes mitgeteilt bekommt.

Hieraus ergeben sich verschiedene Anwendungsmöglichkeiten. Zum Beispiel könnte der das ortsfeste Sende-Empfangsgerät charakterisierenden Identifikationskode dem mobilen Sende-Empfangsgerät Informationen über seinen Standort liefern, wenn das mobile Sende-Empfangsgerät den das ortsfeste Sende-Empfangsgerät charakterisierenden Identifikationskode einer Position zuordnen kann oder auf eine solche Information zugreifen kann.

Den Identifikationskode logisch zu übertragen bedeutet, dass dies direkt von ortsfestem zu mobilen Sende-Empfangsgerät geschehen kann, oder indirekt, wobei noch andere Komponenten im Ortungssystem enthalten sein können, über welche der Identifikationskode als Zwischenstationen gesendet wird. Insbesondere kann dies auch bedeuten, dass in einem Netzwerk gesendet wird, in welchem prinzipiell alle Sende-Empfangsgeräte eine Nachricht empfangen können, jedoch nur die Nachrichten annehmen, welche an sie über eine Netzwerkadresse adressiert sind.

Nach dem Empfang zu übertragen bedeutet unmittelbar nach dem Empfang zu übertragen, soweit die Hardware- und Software-Grundlagen dies zulassen.

Mobiles Sende-Empfangsgerät bedeutet, dass es im Gebrauch dazu ausgebildet ist, den Ort zu wechseln, je nachdem, was der Benutzer wünscht. Insbesondere bezieht sich die Bezeichnung auf Batterie betriebene Geräte.

In einer besonders bevorzugten Ausführungsform der Erfindung enthält das Ortungssystem außerdem mindestens eine von den Sende- Empfangsgeräten unterschiedliche Datenübertragungseinheit zur drahtlosen Übertragung von Daten, die ausgebildet ist, mit der zweiten Funktechnologie zu kommunizieren, wobei das ortsfeste Sende-Empfangsgerät ausgebildet ist, beim Empfang des Identifikationskodes des mobilen Sende-Empfangsgeräts den das ortsfeste Sende-Empfangsgerät charakterisierenden Identifikationskode mit der zweiten Funktechnologie an die Datenübertragungseinheit zu übertragen, wobei die Datenübertragungseinheit als Master eingesetzt wird und das ortsfeste sowie das mobile Sende-Empfangsgerät als Clients.

Der technische Effekt dieser Ausführungsform ist, dass die Kanäle der zweiten Funktechnologie mittels der Datenübertragungseinheit koordiniert werden können. Mit Kanäle werden vorgegebene Frequenzbänder bezeichnet, die vom Master als Kommunikationskanäle ausgewählt werden, und von den Clients verwendet werden.

In einer weiteren vorteilhaften Ausführungsform der Erfindung besitzen sowohl das ortsfeste als auch das mobile Sende-Empfangsgerät innerhalb der zweiten Funktechnologie eine eindeutige Netzwerkkartenadresse und eine Netzwerkadresse.

Das ortsfeste Sende-Empfangsgerät ist dabei ausgebildet, den Identifikationskode des mobilen Sende-Empfangsgeräts in seine Netzwerkkartenadresse und eine zugehörige Netzwerkadresse des mobilen Sende- Empfangsgeräts zu wandeln und den Identifikationskode des ortsfesten Sende- Empfangsgeräts und die Netzwerkadresse des mobilen Sende- Empfangsgeräts mit der zweiten Funktechnologie an die Datenübertragungseinheit zu senden.

Die Datenübertragungseinheit ist in dieser Ausführungsform ausgebildet, mittels der Netzwerkadresse des mobilen Sende- Empfangsgeräts den Identifikationskode des ortsfesten Sende- Empfangsgeräts an das mobile Sende-Empfangsgerät zu übertragen.

Der technische Effekt dieser Ausführungsform ist, dass die Übertragung des Identifikationskodes des ortsfesten Sende-Empfangsgeräts an das mobile Sende-Empfangsgerät in einem Netzwerk stattfinden kann, weil sowohl dem ortsfesten als auch dem mobilen Sende-Empfangsgerät eine Netzwerkadresse und eine Netzwerkkartenadresse zukommen und sie dadurch im Netzwerk eindeutig adressierbar sind. Dadurch wird es dem Ortungssystem auf einfache Weise möglich mehrere mobile Sende-Empfangsgeräte zu bedienen, weil es mit der zweiten Funktechnologie innerhalb eines Netzwerks kommunizieren kann. Weiterhin können auch eine Vielzahl von ortsfesten Sende-Empfangsgeräten einfach im Netzwerk verwaltet werden.

Dadurch wird es möglich, dass viele ortsfeste Sende-Empfangsgeräte verteilt aufgestellt werden können, und mobile Sende-Empfangsgeräte, die in die Funkreichweite der ersten Funktechnologie der ortsfesten Sende-Empfangsgeräte, welche vergleichsweise gering ist, eintreten, den jeweiligen das jeweilige ortsfeste Sende-Empfangsgerät charakterisierenden Identifikationskode empfangen können. Wenn die mobilen Sende-Empfangsgeräte die jeweiligen Identifikationskodes einer Position zuordnen können, sind sie immer, wenn sie einen Identifikationskode empfangen, im Besitz der Information, wo sie sich befinden.

Es versteht sich, dass die Genauigkeit der Positionsbestimmung davon abhängt, wie dicht die Verteilung der ortsfesten Sende-Empfangsgeräte ist und wie groß die Funkreichweite der ersten Funktechnologie ist. Je kleiner diese Reichweite, um so genauer kann die Positionsbestimmung sein.

In einer Ausführungsform ist deshalb das mobile Sende-Empfangsgerät ausgebildet, dem Identifikationskode des ortsfesten Sende-Empfangsgeräts eine Position zuzuordnen.

In einer bevorzugten Ausführungsform des Ortungssystems ist die Datenübertragungseinheit ein Drahtlosnetzwerkzugriffspunkt (WLAN Access Point).

In einer weiteren Ausführungsform der Erfindung enthält das Ortungssystem eine Datenverarbeitungsanlage, welche mit der Datenübertragungseinheit verbunden ist und abrufbare ortsspezifische Daten enthält.

Das mobile Sende-Empfangsgerät ist in dieser Ausführungsform ausgebildet, anhand des mit der zweiten Funktechnologie empfangenen Identifikationskodes des ortsfesten Sende-Empfangsgeräts die ortsspezifischen Daten mit der zweiten Funktechnologie von der Datenverarbeitungsanlage über die Datenübertragungseinheit abzurufen.

Die Datenverarbeitungsanlage ist dabei ausgebildet, auf Anfrage des mobilen Sende-Empfangsgeräts ortsspezifische Daten über die Datenübertragungseinheit an das mobile Sende-Empfangsgerät zu übertragen.

Der Vorteil dieser Ausführungsform ist, dass dem mobilen Sende-Empfangsgerät dem Ort entsprechende Daten von der Datenverarbeitungsanlage zur Verfügung gestellt werden können. Eine Datenverarbeitungsanlage ist meist als Standgerät ausgebildet und hat daher die Möglichkeit eine größere Menge an Daten zu speichern, als ein mobiles Gerät. In dieser Ausführungsform hat das mobile Sende-Empfangsgerät Zugriff auf diese größere Menge an Daten.

Die einfachste ortsspezifische Information, die auf der Datenverarbeitungsanlage abgelegt sein kann ist eine Positionsangabe. Somit kann die Datenverarbeitungsanlage einem jeweiligen Identifikationskode eines ortsfesten Sende-Empfangsgeräts eine Position zuordnen und die Information mit der zweiten Funktechnologie an das mobile Sende-Empfangsgerät übertragen.

Es sind viele weitere Inhalte denkbar, welche an das mobile Sende-Empfangsgerät übertragen werden könnten, wie z.B. Ausgaben von komplexen Datenbanken, welche nur auf einer Datenverarbeitungsanlage laufen können.

Anwendungsbeispiele sind Museen, in welchen je nach Standort des mobilen Sende-Empfangsgeräts verschiedene Informationen abrufbar sind. So können genaue Beschreibungen der Hintergründe zu Kunstwerken abrufbar sein. Dazu muss in der Nähe eines jeweiligen Kunstwerks ein ortsfestes Sende-Empfangsgerät angebracht werden. Wenn ein Benutzer mit einem mobilen Sende-Empfangsgerät sich dem Kunstwerk nähert, überträgt das ortsfeste Sende-Empfangsgerät seinen Identifikationskode an das mobile Sende-Empfangsgerät. Anhand dieses Identifikationskodes kann der Benutzer dem Identifikationskode zugeordnete Informationen von der Datenverarbeitungsanlage abrufen.

In einem Ausführungsbeispiel ist die Datenübertragungseinheit mit einer Datenverarbeitungsanlage verbunden, welche abrufbare Daten enthält, die jeweils über einen Identifikationskode eines ortsfesten Sende-Empfangsgeräts abrufbar sind, wobei das mobile Sende-Empfangsgerät ausgebildet ist, innerhalb einer Anfrage mit der zweiten Funktechnologie nach ortsspezifischen Daten den Identifikationskode des ortsfesten Sende-Empfangsgeräts über die Datenübertragungseinheit an die Datenverarbeitungsanlage zu übertragen.

Die Datenverarbeitungsanlage ist weiterhin ausgebildet, die Netzwerkadresse des mobilen Sende-Empfangsgeräts und den Identifikationskode des ortsfesten Sende- Empfangsgeräts von der Datenübertragungseinheit zu empfangen und in der Datenverarbeitungsanlage abgelegten für den Identifikationskode des ortsfesten Sende- Empfangsgeräts spezifischen Daten zuzuordnen und an das mobile Sende- Empfangsgerät mittels der Netzwerkadresse des mobilen Sende-Empfangsgeräts über die Datenübertragungseinheit zu übertragen.

Der technische Effekt dieser Ausführungsform ist, dass die Datenverarbeitungsanlage ausgebildet ist, dem Identifikationskode des ortsfesten Sende-Empfangsgeräts die ortsspezifischen Daten zuzuordnen. Damit benötigt ein eingesetztes mobiles Sende-Empfangsgerät wenig Information über die Identifikationskodes und die zugehörigen Daten, da die Datenverarbeitungsanlage über diese Informationen verfügt.

In einem weiteren Ausführungsbeispiel des Ortungssystems ist die Datenübertragungseinheit an eine Datenverarbeitungsanlage angeschlossen, und das mobile Sende-Empfangsgerät ist ausgebildet, anhand des Identifikationskodes des ortsfesten Sende-Empfangsgeräts ortsspezifische Daten zuzuordnen und eine Anfrage nach den ortsspezifischen Daten über die Datenübertragungseinheit an die Datenverarbeitungsanlage zu übertragen,

Die Datenverarbeitungsanlage ist hier ausgebildet, die Netzwerkadresse des mobilen Sende-Empfangsgeräts und die Anfrage des mobilen Sende-Empfangsgeräts nach den ortsspezifischen Daten von der Datenübertragungseinheit zu empfangen und die in der Datenverarbeitungsanlage abgelegten ortsspezifischen Daten an das mobile Sende- Empfangsgerät mittels der Netzwerkadresse des mobilen Sende-Empfangsgeräts über die Datenübertragungseinheit zu übertragen.

Bei dieser Ausführungsform ist das mobile Sende-Empfangsgerät ausgebildet, dem Identifikationskode des ortsfesten Sende-Empfangsgeräts Daten auf der Datenverarbeitungsanlage zuzuordnen. Dies hat den Effekt, dass das mobile Gerät personalisiert sein kann. Das heißt, dass verschiedene mobile Sende-Empfangsgeräte verschiedene Inhalte den selben Orten und den zugehörigen Identifikationskodes zuordnen können. Damit erreicht man eine größere Individualität der mobilen Sende-Empfangsgeräte.

In einem Ausführungsbeispiel des Ortungssystems enthält die Steuereinheit des mobilen Sende-Empfangsgeräts einen Speicher, in welchem Identifikationskodes von ortsfesten Sende-Empfangsgeräten zu räumlichen Positionen zugeordnet gespeichert sind, und die Steuereinheit ist ausgebildet, dem empfangenen Identifikationskode des ortsfesten Sende-Empfangsgeräts eine räumliche Position zuzuordnen.

Der Technische Effekt dieses Ausführungsbeispiels ist, dass eine einfache Anordnung des Ortungssystems möglich ist, weil nur die Positionsinformation von Interesse ist. Daher kann diese Positionsinformation auf dem mobilen Sende-Empfangsgerät gespeichert werden.

In einer weiteren Ausführungsform des Ortungssystems ist das ortsfeste Sende- Empfangsgerät ausgebildet, den Identifikationskode des mobilen Sende-Empfangsgeräts an die Datenverarbeitungsanlage über die Datenübertragungseinheit zu senden und anhand des Identifikationskodes des mobilen Sende-Empfangsgeräts, eine Netzwerkkartenadresse und eine zugehörige Netzwerkadresse des mobilen Sende-Empfangsgeräts über die Datenübertragungseinheit von der Datenverarbeitungsanlage abzurufen.

Die Datenverarbeitungsanlage ist hierbei ausgebildet, den empfangenen Identifikationskode des mobilen Sende-Empfangsgeräts der Netzwerkkartenadresse und der zugehörigen Netzwerkadresse zuzuordnen und über die Datenübertragungseinheit an das ortsfeste Sende-Empfangsgerät zu übertragen.

Der technische Effekt dieser Ausführungsform ist, dass das ortsfeste Sende-Empfangsgerät die Netzwerkadressen und Netzwerkkartenadressen leichter zuordnen kann, weil diese zentral auf der Datenverarbeitungsanlage gespeichert sind. Es ist somit ein einfacheres Design des ortsfesten Sende-Empfangsgeräts möglich, weil Speicherplatz eingespart werden kann. Auch die Verwaltung von vielen ortsfesten Sende-Empfangsgeräten wird vereinfacht, weil nur auf der Datenverarbeitungsanlage eine Zuordnungstabelle aktualisiert werden muss, wenn sich die Zuordnungen von Netzwerkadressen zu Identifikationskodes mobiler Sende-Empfangsgeräte ändern oder neue hinzukommen.

In einem Ausführungsbeispiel des Ortungssystems enthält die Datenverarbeitungsanlage ein Funkmodul für die zweite Funktechnologie und ist ausschließlich drahtlos mit der Datenübertragungseinheit verbunden.

Der technische Effekt dieser Ausführungsform ist, dass so die Datenverarbeitungsanlage unabhängig vom Standort der Datenübertragungseinheit ist. Die Datenverarbeitungsanlage ist damit im Netzwerk als Client angemeldet und die Datenübertragungseinheit ist unabhängiger Master.

In einer weiteren Ausführungsform ist die Datenverarbeitungsanlage drahtgebunden mit der Datenübertragungseinheit verbunden.

Der technische Effekt dieser Ausführungsform ist, dass die Kommunikationsgeschwindigkeit durch die Übertragung von Daten von der Datenverarbeitungsanlage zur Datenübertragungseinheit nicht die Kommunikationsgeschwindigkeit der anderen Clients des Drahtlosnetzwerks beeinflusst. Damit sind höhere Datenraten möglich, da die meisten Verbindungen zwischen den mobilen Sende-Empfangsgeräten und der Datenverarbeitungsanlage aufgebaut werden.

In einer Ausführungsform der Erfindung ist die erste Funktechnologie eine Spreizspektrumfunktechnologie.

Dies hat den Vorteil, dass bei gleicher Abstrahlleistung eines Senders ein weniger hoher Peak im Frequenzspektrum auftritt. Weiterhin ist das Signal weniger leicht detektierbar und bietet dadurch mehr Anonymität.

In einer Ausführungsform der Erfindung ist die erste Funktechnologie eine Spreizspektrumfunktechnologie, wobei die Spreizspektrumfunktechnologie auf Frequenzsprungverfahren basiert.

Der technische Effekt dieser Ausführungsform ist, dass das Signal störunanfälliger wird, weil es in einem breiteren Band funktioniert und eine schmalbandige starke Störquelle nur einen Teil des Bandes, welches verwendet wird stören kann.

In einem weiteren Ausführungsbeispiel des Ortungssystems arbeitet die erste Funktechnologie nach den Bluetooth-Spezifikationen (gemäß IEEE 802.15.1).

Der technische Effekt dieser Ausführungsform ist, dass jedes Bluetooth Modul von sich aus einen eindeutigen Identifikationskode hat. Dies unterstützt die Erfindung, weil damit jedes mobile Sende-Empfangsgerät und jedes ortsfeste Sende-Empfangsgerät eindeutig durch den Identifikationskode zu unterscheiden ist. Die Authentifizierung läuft nach dem Bluetooth-Standard folgendermaßen ab. Ein Gerät sendet ständig Identifikationsanfragen aus, es befindet sich im sog. Inquiry State. Bezogen auf die Erfindung ist dieses Gerät das ortsfeste Sende-Empfangsgerät. Ein weiteres Gerät beantwortet diese Anfrage mit seinem eindeutigen Identifikationskode, sog. Inquiry Response. Dieses Gerät befindet sich im Anfragensuchmodus, sog. Inquiry Scan State. Im Sinne der Erfindung wäre dieses Gerät das mobile Sende-Empfangsgerät.

In einer weiteren Ausführungsform des Ortungssystems gemäß der Erfindung ist das ortsfeste Sende-Empfangsgerät ausgebildet, die Sende-/Empfangsreichweite der ersten Funktechnologie einzustellen und damit verschiedene Sende-/Empfangszellengrößen einzustellen.

Der technische Effekt dieser Ausführungsform ist, dass die Entfernung, bei welcher ein mobiles Sende-Empfangsgerät detektiert wird, indem es die Identifikationsanfragesignale empfängt und beantwortet, einstellbar ist. Mit Sende-/Empfangszelle wird das Innere des Funkreichweitekreises bezeichnet. Damit lässt sich auch die Genauigkeit der Ortung einstellen. Bei einer dichteren Verteilung der ortsfesten Sende-Empfangsgeräte und kleinerer Empfangszellengröße wird die Genauigkeit erhöht.

In einer Ausführungsform des Ortungssystems liegt der Sende/Empfangszellenradius der ersten Funktechnologie des ortsfesten Sende-Empfangsgeräts zwischen 30 cm und 25 Metern.

Dies ist ein technisch gut realisierbarer Bereich.

Bei einer weiteren Ausführungsform der Erfindung arbeitet die zweite Funktechnologie nach einem Quadratur-amplituden-modulationsverfahren.

Quadratur-amplituden-modulationsverfahren eignen sich gut für die Übertragung bei hohen Datenraten, weil pro Symbol mehrere Bit übertragen werden können.

Bei einer weiteren Ausführungsform des Ortungssystems basiert die zweite Funktechnologie auf OFDM-Modulation (Orthogonal Frequency Division Multiplexing), CCK-Modulation (Complementary Code Keying) oder PBCC-Modulation (Packet Binary Convolutional Coding).

Dies sind Beispiele für mögliche Modulationsverfahren, die sich für die zweite Funktechnologie besonders eignen. Es sollte bemerkt werden, dass auch andere Funktechnologien zum Einsatz kommen können.

Bei einer bevorzugten Ausführungsform der Erfindung ist die zweite Funktechnologie WLAN oder ist WiFi zertifiziert.

Die WLAN-Technologie ist zur Datenübertragung mit hohen Datenraten geeignet. Damit können auch Inhalte an das mobile Sende-Empfangsgerät übertragen werden, die hohe Datenraten erfordern, wie Multimediadaten, speziell Videoinhalte.

Ein weiterer Vorteil ergibt sich dadurch, dass die mobilen und die ortsfesten Sende-Empfangsgeräte ständig im Netzwerk angemeldet sind, dadurch ergibt sich eine hohe Reaktionsgeschwindigkeit für das Übertragen des Identifikationskodes des ortsfesten Sende-Empfangsgeräts an das mobile Sende-Empfangsgerät.

In einer weiteren Ausführungsform des Ortungssystems sind die Abfragesignale des ortsfesten Sende-Empfangsgeräts im Bluetooth-Standard definierte, dedizierte Zugangskodeanfragen (DIAC) und das mobile Sende-Empfangsgerät ist ausgebildet, eine dedizierte Zugangskodeanfragensuche (DIAC) durchzuführen und nur auf dedizierte Zugangskodeanfragen (DIAC) zu antworten.

Der technische Effekt dieses Ausführungsbeispiels ist, dass nur die Bluetooth-Geräte, welche auf die dedizierten Zugangskodeanfragen eingestellt sind mit ihrem Identifikationskode antworten. Dadurch antworten nur die mobilen Sende-Empfangsgeräte und nicht andere bluetooth-fähige Geräte. So wird der Detektionsprozess ungestört durchgeführt und die ortsfesten Sende-Empfangsgeräte werden entlastet. Außerdem antworten die mobilen Sende-Empfangsgeräte nur auf diese dedizierten Zugangskodeanfragen der ortsfesten Sende-Empfangsgeräte. Dadurch wird erreicht, dass die mobilen Sende-Empfangsgeräte nicht durch andere Bluetooth-Geräte geortet werden können, womit die Privatsphäre der Benutzer der mobilen Sende-Empfangsgeräte geschützt wird.

Dedizierte Zugangskodeanfragen sind die Anfragen zur Abfrage eines jeweiligen Identifikationskodes. Dedizierte Zugangskodeanfragen stehen im Gegensatz zu globalen Zugangskodeanfragen (GIAC), auf welche alle bluetooth-fähigen Geräte antworten. Auf dedizierte Zugangskodeabfragen antworten nur die Geräte, welche darauf eingestellt sind.

In einem Ausführungsbeispiel ist das mobile Sende-Empfangsgerät ausgebildet, auf Zugangskodeanfragen des ortsfesten Sende-Empfangsgeräts als Antwort seine Bluetooth-Device-Adresse (BDADDR) zu senden.

In diesem Ausführungsbeispiel ist der Identifikationskode des mobilen als auch des ortsfesten Sende-Empfangsgeräts eine Bluetooth-Device-Adresse (BDADDR) ist.

Der technische Effekt dieses Ausführungsbeispiels ist, dass die Zugangskodes oder Identifikationskodes für jedes Bluetooth-Modul einmalig sind. Damit ergibt sich für das Ortungssystem eine Eindeutigkeit der Identifikationskodes.

In einer weiteren Ausführungsform der Erfindung ist die Datenverarbeitungsanlage ausgebildet, auf Anfrage des mobilen Sende-Empfangsgeräts ortsspezifische Ereignisse auszulösen.

Der technische Effekt dieser Ausführungsform ist, dass ein Benutzer an einem mobilen Sende-Empfangsgerät eine Anfrage zum Auslösen eines Ereignisses stellen kann und dieses dann entsprechend dem Ort, an dem sich das mobile Sende-Empfangsgerät befindet, angepasst wird.

Beispiele für Ereignisse sind das Anzeigen eines bestimmten Inhalts auf dem mobilen Sende-Empfangsgerät, Schließen eines Schaltkreises und Anschalten einer vorgegebenen physikalischen Einheit in der Nähe des Ortes, an welchem das mobile Sende-Empfangsgerät detektiert wurde, solche können sein, einfaches Licht Einschalten, Abspielen eines Videos oder einer Audiosequenz etc.

Bei einem weiteren Ausführungsbeispiel des Ortungssystems ist die Datenverarbeitungsanlage an eine Ereignis-Steuereinheit angeschlossen und ist ausgebildet, eine Anfrage des mobilen Sende-Empfangsgeräts, welche den Identifikationskode des ortsfesten Sende-Empfangsgeräts enthält, zu empfangen und auf Anfrage des mobilen Sende-Empfangsgeräts anhand des übertragenen Identifikationskodes des ortsfesten Sende-Empfangsgeräts mit der Ereignis-Steuereinheit ortsspezifische Ereignisse auszulösen.

In einem weiteren Ausführungsbeispiel ist die Ereignis-Steuereinheit ausgebildet, die ortsspezifischen Ereignisse an einem von der Ereignis-Steuereinheit entfernten Ort auszulösen, wobei der entfernte Ort der vorbestimmte Ort ist, an welchem das ortsfeste Sende-Empfangsgerät aufgestellt ist, welches den das ortsfeste Sende-Empfangsgerät charakterisierenden Identifikationskode logisch an das mobile Sende-Empfangsgerät übertragen hat.

Der technische Effekt dieser Ausführungsform ist, dass Ereignisse an Orten ausgelöst werden können, unabhängig davon, wo sich die Datenverarbeitungsanlage befindet.

Bei einem weiteren Ausführungsbeispiel des Ortungssystems ist die Datenübertragungseinheit mit einer Datenverarbeitungsanlage verbunden, welche ausgebildet ist, dem Identifikationskode des ortsfesten Sende-/Empfangsgeräts ortsfeste Positionen oder ortsspezifische Daten oder ortsspezifische Ereignisse zuzuordnen.

Der technische Effekt dieses Ausführungsbeispiels ist, dass die Datenverarbeitungsanlage ausgebildet ist, die Zuordnung von Identifikationskode und Ereignis vorzunehmen.

Bei einer Ausführungsform enthält das erste Funkmodul des mobilen Sende-Empfangsgeräts einen Signalstärkeauswertungsschaltkreis und ist ausgebildet, eine Signalstärke eines empfangenen Abfragesignals der ersten Funktechnologie für Identifikationskodes eines mobilen Sende-Empfangsgeräts zu messen, in einen Signalstärkewert zu wandeln und an die Steuereinheit zu übertragen, welche ausgebildet ist, den Signalstärkewert in einen Entfernungswert zu wandeln und die Position des mobilen Sende-Empfangsgeräts genauer zu bestimmen.

Der technische Effekt dieser Ausführungsform ist, dass die Positionsbestimmung genauer ist als allein durch die Sichtung im Funkbereich eines ortsfesten Sende-Empfangsgeräts. Durch die Signalstärkemessung kann die Entfernung zwischen ortsfestem und mobilen Sende-Empfangsgerät ermittelt werden und nicht nur die Tatsache, dass man sich im Empfangsbereich eines ortsfesten Sende-Empfangsgeräts befindet. Dadurch wird die Positionsbestimmung auf einen kleineren Kreis reduziert.

Bei einer weiteren Ausführungsform ist die Steuereinheit des mobilen Sende-Empfangsgeräts ausgebildet, mehrere Entfernungswerte von unterschiedlichen ortsfesten Sende-Empfangsgeräten zu bestimmen, abzuspeichern und zu vergleichen und aus dem Vergleich die Position des mobilen Sende-Empfangsgeräts genauer zu bestimmen.

Dadurch wird es möglich, dass sich die Funkabdeckungsbereiche überschneiden, weil das mobile Sende-Empfangsgerät messen kann, welchem ortsfesten Sende-Empfangsgerät es näher ist, wenn das mobile Sende-Empfangsgerät von zwei ortsfesten Sende-Empfangsgeräten gesichtet wird.

Bei einer weiteren Ausführungsvariante der Erfindung enthält das erste Funkmodul des ortsfesten Sende-Empfangsgeräts einen Signalstärkeauswertungsschaltkreis und ist ausgebildet, eine Signalstärke eines empfangenen Signals der ersten Funktechnologie beim Empfang des Identifikationskodes vom mobilen Sende-Empfangsgerät zu messen, in einen Signalstärkewert zu wandeln und an die Steuereinheit zu übertragen, welche ausgebildet ist, den Signalstärkewert zusammen mit dem das ortsfeste Sende-Empfangsgerät charakterisierenden Identifikationskode mit dem zweiten Funkmodul an das mobile Sende-Empfangsgerät zu übertragen.

Bei diesem Ausführungsbeispiel wird die Signalstärkemessung und Entfernungsbestimmung zwischen ortsfestem und mobilen Sende-Empfangsgerät vom ortsfesten Sende-Empfangsgerät durchgeführt. Dadurch kann die Signalstärkemessung auch durchgeführt werden, wenn das mobile Sende-Empfangsgerät keinen Signalstärkeauswertungsschaltkreis besitzt. Damit ist das Ortungssystem unabhängiger vom eingesetzten mobilen Sende-Empfangsgerät.

Bei einem Ausführungsbeispiel des Ortungssystems enthalten sowohl ein ortsfestes Infrarotleuchtfeuer als auch das mobile Sende-Empfangsgerät ein Drahtlos-Infrarot-Modul mit einer Sende-Empfangs-Zelle bestimmter Größe und Richtung und sind ausgebildet, mit dem Drahtlos-Infrarot-Modul zu kommunizieren, wobei das mobile Sende-Empfangsgerät ausgebildet ist, innerhalb der Sende-Empfangs-Zelle des ortsfesten Infrarotleuchtfeuers eine Infrarot-Kommunikation mit dem ortsfesten Infrarotleuchtfeuer aufzubauen, einen zweiten Identifikationskode vom Infrarotleuchtfeuer zu empfangen und anhand des zweiten Identifikationskodes seine eigene Position zu bestimmen.

Bei diesem Ausführungsbeispiel wird die Position des mobilen Sende-Empfangsgeräts genauer durch Infrarotkommunikation bestimmt. Ein Infrarotleuchtfeuer ist ein Kommunikationsgerät für Infrarotkommunikation, welches verwendet wird, um es einem mobilen Sende-Empfangsgerät zu ermöglichen, seine Position zu bestimmen, wenn es in den Infrarotabdeckungsbereich des Infrarotleuchtfeuers kommt, indem das Infrarotleuchtfeuer einen Identifikationskode sendet. Dabei ist das mobile Sende-Empfangsgerät ausgebildet, dem Identifikationskode eine Position zuzuordnen. Der technische Effekt dieses Ausführungsbeispiels ist, dass das mobile Sende-Empfangsgerät eine weitere Möglichkeit hat, seine Position zu bestimmen. Mit Sende-Empfangs-Zelle wird der Bereich bezeichnet, in welchem sich die Reichweite des Infrarotmoduls erstreckt.

Bei einer weiteren Ausführungsform ist die Steuereinheit des mobilen Sende-Empfangsgeräts ausgebildet, die empfangenen Identifikationskodes mehrerer ortsfester Sende-Empfangsgeräte zu speichern und eine Plausibilitätsprüfung mit einer Abfolge der empfangenen Identifikationskodes durchzuführen.

Der technische Effekt dieser Ausführungsform ist, dass das mobile Sende-Empfangsgerät prüfen kann, ob es plausibel ist, dass es sich an einer bestimmten Position befindet, wenn es einen Identifikationskode eines ortsfesten Sende-Empfangsgeräts empfängt. Damit wird vermieden, dass das mobile Sende-Empfangsgerät seine Position falsch bestimmt, wenn es durch Zufall einem ortsfesten Sende-Empfangsgerät antwortet, obwohl es eigentlich noch nicht im Empfangsbereich dieses ortsfesten Sende-Empfangsgeräts ist. Dies kann geschehen, wenn sich z.B. durch Reflexionen der Signale der ersten Funktechnologie der Sende-Empfangsbereich vergrößert. Das mobile Sende-Empfangsgerät hat dabei mögliche Abfolgen von Identifikationskodes ortsfester Sende-Empfangsgeräte gespeichert und vergleicht die Abfolge mit den gespeicherten.

Erfindungsgemäß wird die technische Aufgabe durch ein Ortungs-Sende-Empfangsgerät zur Verwendung als ortsfestes Ortungs-Sende-Empfangsgerät an einem vorbestimmten Ort zum Orten von mobilen Sende-Empfangsgeräten gelöst, welches ein erstes Funkmodul zum Senden und Empfangen mit einer ersten Funktechnologie vergleichsweise geringer Sende- bzw. Empfangsreichweite und ein zweites Funkmodul zum Senden und Empfangen mit einer zweiten Funktechnologie vergleichsweise hoher Reichweite, eine Steuereinheit enthält, und die Steuereinheit mit dem ersten und dem zweiten Funkmodul verbunden ist.

Das Ortungs-Sende-Empfangsgerät ist weiterhin ausgebildet, über die erste Funktechnologie und über die zweite Funktechnologie zu kommunizieren und mit dem ersten Funkmodul mit der ersten Funktechnologie kontinuierlich Abfragesignale zur Abfrage von Identifikationskodes mobiler Sende-Empfangsgeräte auszusenden, wobei die Abfragen ein in die Funkreichweite der ersten Funktechnologie des Ortungs-Sende-Empfangsgeräts eintretendes mobiles Sende-Empfangsgerät veranlassen seinen Identifikationskode mit der ersten Funktechnologie an das Ortungs-Sende-Empfangsgerät zu senden.

Das erfindungsgemäße Ortungs-Sende-Empfangsgerät ist ausgebildet, den Identifikationskode mit dem ersten Funkmodul mit der ersten Funktechnologie zu empfangen und unmittelbar nach dem Empfang des Identifikationskodes des mobilen Sende-Empfangsgeräts einen das ortsfeste Sende-Empfangsgerät charakterisierenden Identifikationskode mit dem zweiten Funkmodul mit der zweiten Funktechnologie logisch an das mobile Sende-Empfangsgerät zu übertragen.

Dies hat den technischen Effekt, dass mit dem Ortungs-Sende-Empfangsgerät mobile Sende-Empfangsgeräte detektiert werden können und der Identifikationskode des Ortungs-Sende-Empfangsgeräts mit der zweiten Funktechnologie an die mobilen Sende-Empfangsgeräte übertragen wird. Damit wird das mobile Sende-Empfangsgerät über seine Position informiert, indem das mobile Sende-Empfangsgerät dem Identifikationskode des Ortungs-Sende-Empfangsgeräts eine Position zuordnet.

Den Identifikationskode logisch zu übertragen bedeutet, dass dies direkt von ortsfestem zu mobilen Sende-Empfangsgerät geschehen kann, oder indirekt, wobei noch andere Komponenten im am Übertragen beteiligt sein können, über welche der Identifikationskode als Zwischenstationen gesendet wird. Insbesondere kann dies auch bedeuten, dass in einem Netzwerk gesendet wird, in welchem prinzipiell alle Sende-Empfangsgeräte eine Nachricht empfangen können, jedoch nur die Nachrichten annehmen, welche an sie über eine Netzwerkadresse adressiert sind.

Nach dem Empfang zu übertragen bedeutet unmittelbar nach dem Empfang zu übertragen, soweit die Hardware- und Software-Grundlagen dies zulassen.

Bei einem Ausführungsbeispiel ist das Ortungs-Sende-Empfangsgeräts ausgebildet, beim Empfang des Identifikationskodes des mobilen Sende-Empfangsgeräts den das ortsfeste Sende-Empfangsgerät charakterisierenden Identifikationskode mit der zweiten Funktechnologie an eine Datenübertragungseinheit zu übertragen, die ein vom Ortungs-Sende-Empfangsgerät unterschiedliches Gerät ist.

Der technische Effekt dieses Ausführungsbeispiels ist, dass das Ortungs-Sende-Empfangsgerät nicht direkt an das mobile Sende-Empfangsgerät senden muss, sondern zusätzlich eine Datenübertragungseinheit als Unterstützung hat.

Bei einer Ausführungsform des Ortungs-Sende-Empfangsgeräts ist die Steuereinheit ausgebildet, den Identifikationskode des mobilen Sende-Empfangsgeräts in seine Netzwerkkartenadresse und eine zugehörige Netzwerkadresse des mobilen Sende-Empfangsgeräts zu wandeln und zusammen mit dem das ortsfeste Sende-Empfangsgerät charakterisierenden Identifikationskode an das zweite Funkmodul zu übertragen.

Das Ortungs-Sende-Empfangsgerät ist bei dieser Ausführungsform ausgebildet, den Identifikationskode des Ortungs-Sende-Empfangsgeräts mittels der Netzwerkadresse des mobilen Sende- Empfangsgeräts mit dem zweiten Funkmodul mit der zweiten Funktechnologie über die Datenübertragungseinheit an das mobile Sende-Empfangsgerät zu übertragen, wobei die Datenübertragungseinheit ein vom Ortungs-Sende-Empfangsgerät und mobilen Sende-Empfangsgerät unterschiedliches Gerät ist.

Der technische Effekt dieser Ausführungsform ist, dass das Ortungs-Sende-Empfangsgerät das mobile Sende-Empfangsgerät mit seiner Netzwerkadresse innerhalb eines Netzwerks adressieren kann. Somit können mit der zweiten Funktechnologie mehrere mobile Sende-Empfangsgeräte adressiert werden.

Bei einer weiteren Ausführungsform der Erfindung ist das Ortungs-Sende-Empfangsgerät ausgebildet, den Identifikationskode an die Datenübertragungseinheit zu senden und anhand des Identifikationskodes des mobilen Sende-Empfangsgeräts, seine Netzwerkkartenadresse und seine zugehörige Netzwerkadresse über die Datenübertragungseinheit abzurufen.

Der technische Effekt dieser Ausführungsform ist, dass das Ortungs-Sende-Empfangsgerät die Netzwerkadressen und Netzwerkkartenadressen leichter zuordnen kann, weil diese zentral auf der Datenverarbeitungsanlage gespeichert werden können. Es ist somit ein einfacheres Design des Ortungs-Sende-Empfangsgeräts möglich, weil Speicherplatz eingespart werden kann.

Bei einer weiteren Ausführungsform des Ortungs-Sende-Empfangsgeräts ist die Steuereinheit ausgebildet, eine Zuordnungstabelle von Identifikationskodes mobiler Sende-Empfangsgeräte zu Netzwerkadressen von einer Datenverarbeitungsanlage mit dem zweiten Funkmodul abzufragen und zu speichern.

Der technische Effekt dieser Ausführungsform ist, dass das Ortungs-Sende-Empfangsgerät immer eine aktuelle Zuordnungstabelle von der Datenverarbeitungseinrichtung herunter laden kann.

Bei einer weiteren Ausführungsform des Ortungs-Sende-Empfangsgeräts ist die erste Funktechnologie eine Spreizspektrumfunktechnologie.

Dies hat den Vorteil, dass bei gleicher Abstrahlleistung eines Senders ein weniger hoher Peak im Frequenzspektrum auftritt. Weiterhin ist das Signal weniger leicht detektierbar und bietet dadurch mehr Anonymität.

Bei einem Ausführungsbeispiel des Ortungs-Sende-Empfangsgeräts ist die erste Funktechnologie eine Spreizspektrumfunktechnologie, die auf Frequenzsprungverfahren basiert.

Der technische Effekt dieser Ausführungsform ist, dass das Signal störunanfälliger wird, weil es in einem breiteren Band funktioniert und eine schmalbandige starke Störquelle nur einen Teil des Bandes, welches verwendet wird stören kann.

Bei einer Ausführungsform der Erfindung arbeitet das erste Funkmodul mit der ersten Funktechnologie nach den Bluetooth-Spezifikationen (gemäß IEEE 802.15.1).

Der technische Effekt dieser Ausführungsform ist, dass jedes Bluetooth Modul von sich aus einen eindeutigen Identifikationskode hat. Damit sind die mobilen Sende-Empfangsgeräte eindeutig identifizierbar.

Bei einer bevorzugten Ausführungsform ist das Ortungs-Sende-Empfangsgerät ausgebildet, die Sende-/Empfangsreichweite der ersten Funktechnologie einzustellen und damit verschiedene Sende-/Empfangszellengrößen einzustellen.

Der technische Effekt dieser Ausführungsform ist, dass die Entfernung, bei welcher ein mobiles Sende-Empfangsgerät detektiert wird, indem es die Identifikationsanfragesignale des Ortungs-Sende-Empfangsgeräts empfängt und beantwortet, einstellbar ist. Mit Sende-/Empfangszelle wird das Innere des Funkreichweitekreises bezeichnet.

Bei einer Ausführungsform des Ortungs-Sende-Empfangsgeräts liegt die Sende/Empfangszellengröße des Ortungs-Sende-Empfangsgeräts zwischen 30 cm und 25 Metern.

Damit sind sehr unterschiedliche Entfernungen realisierbar, bei welchen das mobile Sende-Empfangsgerät detektiert wird.

Bei einem Ausführungsbeispiel der Erfindung arbeitet das zweite Funkmodul mit der zweiten Funktechnologie nach einem Quadratur-amplituden-modulationsverfahren.

Der technische Effekt dieser Ausführungsform ist, dass Übertragungen mit hohen Datenraten möglich sind, weil pro Symbol mehrere Bit übertragen werden können.

Bei weiteren bevorzugten Ausführungsbeispielen des Ortungs-Sende-Empfangsgeräts basiert die zweite Funktechnologie auf OFDM-Modulation (Orthogonal Frequency Division Multiplexing), CCK-Modulation (Complementary Code Keying) oder PBCC-Modulation (Packet Binary Convolutional Coding).

Dies sind mögliche Modulationsverfahren, die sich für die zweite Funktechnologie besonders eignen. Es sollte bemerkt werden, dass auch andere Funktechnologien zum Einsatz kommen können.

Bei einer bevorzugten Ausführungsform des Ortungs-Sende-Empfangsgeräts ist die zweite Funktechnologie WLAN oder ist WiFi zertifiziert.

Die WLAN-Technologie ist zur Datenübertragung mit hohen Datenraten geeignet. Damit können auch Inhalte an das mobile Sende-Empfangsgerät übertragen werden, die hohe Datenraten erfordern, wie Multimediadaten, speziell Videoinhalte.

Ein weiterer Vorteil ergibt sich dadurch, dass die mobilen und die ortsfesten Sende-Empfangsgeräte ständig im Netzwerk angemeldet sind, dadurch ergibt sich eine hohe Reaktionsgeschwindigkeit für das Übertragen des Identifikationskodes des ortsfesten Sende-Empfangsgeräts an das mobile Sende-Empfangsgerät.

Bei einer Ausführungsform des Ortungs-Sende-Empfangsgeräts sind die Abfragesignale des Ortungs-Sende-Empfangsgeräts im Bluetooth-Standard definierte, dedizierte Zugangskodeanfragen (DIAC).

Der technische Effekt dieses Ausführungsbeispiels ist, dass nur die Bluetooth-Geräte, welche auf die dedizierten Zugangskodeanfragen eingestellt sind mit ihrem Identifikationskode antworten. Dadurch antworten nur bestimmte Sende-Empfangsgeräte und nicht andere bluetooth-fähige Geräte. So wird der Detektionsprozess ungestört durchgeführt und das Ortungs-Sende-Empfangsgerät wird entlastet. Außerdem antworten die bestimmten Sende-Empfangsgeräte nur auf diese dedizierten Zugangskodeanfragen der ortsfesten Sende-Empfangsgeräte. Dadurch wird erreicht, dass die bestimmten Sende-Empfangsgeräte nicht durch andere Bluetooth-Geräte geortet werden können, womit die Privatsphäre der Benutzer der bestimmten Sende-Empfangsgeräte geschützt wird.

Dedizierte Zugangskodeanfragen sind die Anfragen zur Abfrage eines jeweiligen Identifikationskodes. Dedizierte Zugangskodeanfragen stehen im Gegensatz zu globalen Zugangskodeanfragen (GIAC), auf welche alle bluetooth-fähigen Geräte antworten. Auf dedizierte Zugangskodeabfragen antworten nur die Geräte, welche darauf eingestellt sind.

Bei einem weiteren Ausführungsbeispiel des Ortungs-Sende-Empfangsgeräts ist das Ortungs-Sende-Empfangsgerät ausgebildet, als Antwort auf Identifikationskodeanfragen des Ortungs-Sende-Empfangsgeräts eine Bluetooth-Device-Adresse (BDADDR) zu empfangen.

Der technische Effekt dieses Ausführungsbeispiels ist, dass die Zugangskodes oder Identifikationskodes für jedes Bluetooth-Modul einmalig sind. Damit ergibt sich für das Ortungs-Sende-Empfangsgerät eine Eindeutigkeit der Identifikationskodes und besitzt selbst einen eindeutigen Identifikationskode.

Bei einer Ausführungsform des Ortungs-Sende-Empfangsgeräts ist die Steuereinheit ausgebildet, das erste Funkmodul zum Senden oder Empfangen in einem unterschiedlichen Zeitschlitz einzusetzen als das zweite Funkmodul.

Der technische Effekt dieser Ausführungsform ist, dass sowohl die erste als auch die zweite Funktechnologie im selben Frequenzband arbeiten können, weil es keine zeitlichen Überschneidungen beim Einsatz der beiden Funkmodule gibt. Diese Eigenschaft kann auch mit Koexistenz-Merkmal bezeichnet werden.

Bei einem Ausführungsbeispiel des Ortungs-Sende-Empfangsgeräts enthält das erste Funkmodul einen Signalstärkeauswertungsschaltkreis und ist ausgebildet, eine Signalstärke eines empfangenen Signals der ersten Funktechnologie beim Empfang des Identifikationskodes eines mobilen Sende-Empfangsgeräts zu messen, in einen Signalstärkewert zu wandeln und an die Steuereinheit zu übertragen, welche ausgebildet ist, den Signalstärkewert zusammen mit dem das ortsfeste Sende-Empfangsgerät charakterisierenden Identifikationskode an das mobile Sende-Empfangsgerät zu übertragen.

Der technische Effekt dieser Ausführungsform ist, dass einem mobilen Sende-Empfangsgerät ein weiterer Wert vom Ortungs-Sende-Empfangsgerät zur Bestimmung seiner Position zur Verfügung gestellt wird. Anhand der Signalstärke kann die Entfernung zwischen den Sende-Empfangsgeräten ermittelt werden. Somit wird der Kreis, in welchem die Position ermittelt wird, weiter eingeengt. Damit wird die Positionsbestimmung genauer.

Bei einem weiteren Ausführungsbeispiel des Ortungs-Sende-Empfangsgeräts enthält es zusätzlich ein kabelloses Infrarotkommunikationsmodul und ist ausgebildet, mit dem Infrarotkommunikationsmodul mit einem mobilen Sende-Empfangsgerät zu kommunizieren.

Der Vorteil dieses Ausführungsbeispiels ist, dass ein weiteres Kommunikationsmodul zur Verfügung steht und die Positionsbestimmung noch genauer durchgeführt werden kann, weil Infrarotkommunikationsmodule in der Regel eine kleinere Reichweite haben als Funkmodule. Je kleiner die Reichweite des Kommunikationsmoduls, umso genauer wird die Positionsbestimmung, jedoch wird der Abdeckungsbereich, in welchem Sende-Empfangsgeräte detektiert werden können kleiner. Beim Einsatz beider Module, sowohl dem ersten Funkmodul als auch dem Infrarotkommunikationsmodul, können sich die verschiedenen Reichweiten ergänzen. Damit wird eine vergleichsweise ungenaue Positionsbestimmung mit der ersten Funktechnologie mit einer sehr genauen Positionsbestimmung mit dem Infrarotkommunikationsmodul kombiniert.

Die technische Aufgabe der Erfindung wird durch ein Verfahren zum Orten von mobilen Sende-Empfangsgeräten mit einem Ortungssystem gelöst, welches mindestens ein ortsfestes Sende-Empfangsgerät enthält, wobei sowohl das ortsfeste Sende-Empfangsgerät als auch das mobile Sende-Empfangsgerät sowohl mit einer ersten Funktechnologie vergleichsweise geringer Reichweite als auch einer zweiten Funktechnologie vergleichsweise hoher Reichweite kommunizieren können.

Das erfindungsgemäße Verfahren umfasst die Schritte:
i) Kontinuierliches Aussenden von Abfragesignalen mit der ersten Funktechnologie zum Abfragen eines Identifikationskodes des mobilen Sende-Empfangsgeräts durch das ortsfeste Sende-Empfangsgerät,
ii) Antworten durch Aussenden des Identifikationskodes des mobilen Sende-Empfangsgeräts mit der ersten Funktechnologie nach Empfang mindestens eines Abfragesignals des ortsfesten Sende-Empfangsgeräts durch das mobile Sende-Empfangsgerät,
iii) Empfangen des Identifikationskodes des mobilen Sende-Empfangsgeräts durch das ortsfeste Sende-Empfangsgerät,
iv) Aussenden eines das ortsfeste Sende-Empfangsgerät charakterisierenden Identifikationskodes und eines dem Identifikationskode des mobilen Sende-Empfangsgerät zugeordneten Wertes durch das ortsfeste Sende-Empfangsgerät mit der zweiten Funktechnologie,
v) Empfangen des Identifikationskodes des ortsfesten Sende-Empfangsgeräts durch das mobile Sende-Empfangsgerät mit der zweiten Funktechnologie.

Das erfindungsgemäße Verfahren hat den technischen Vorteil, dass das mobile Sende-Empfangsgerät immer wenn es in den Empfangsbereich des ortsfesten Sende-Empfangsgeräts kommt diese Tatsache über den Empfang des das ortsfeste Sende-Empfangsgerät charakterisierenden Identifikationskodes mitgeteilt bekommt.

Bei einem Ausführungsbeispiel des Verfahrens zum Orten von mobilen Sende-Empfangsgeräten mit einem Ortungssystem enthält das Ortungssystem weiterhin eine Datenübertragungseinheit und das Verfahren enthält zwischen Schritt iv) und v) weiterhin die Schritte:
iv a)Empfangen des Identifikationskodes des ortsfesten Sende-Empfangsgeräts und des dem Identifikationskode des dem mobilen Sende-Empfangsgerät zugeordneten Wertes durch die Datenübertragungseinheit,
iv b)Aussenden des Identifikationskodes des ortsfesten Sende-Empfangsgeräts durch die Datenübertragungseinheit mit der zweiten Funktechnologie.

Der technische Effekt dieses Ausführungsbeispiels ist, dass das ortsfeste Sende-Empfangsgerät durch eine Datenübertragungseinheit unterstützt wird. Das ortsfeste Sende-Empfangsgerät muss damit nicht direkt mit dem mobilen Sende-Empfangsgerät kommunizieren, sondern kommuniziert über die Datenübertragungseinheit.

Bei einem bevorzugten Ausführungsbeispiel des Verfahrens zum Orten von mobilen Sende-Empfangsgeräten mit einem Ortungssystem, das auf dem vorherigen Ausführungsbeispiel basiert, enthält der dem Identifikationskode des mobilen Sende-Empfangsgeräts zugeordnete Wert eine Netzwerkkartenadresse oder eine Netzwerkadresse des mobilen Sende-Empfangsgeräts und sowohl das mobile als auch das ortsfeste Sende-Empfangsgerät besitzen eine Netzwerkadresse in einem Netzwerk der zweiten Funktechnologie. Dabei enthält das Verfahren zwischen Schritt iii) und iv) weiterhin den Schritt:
iii a)Zuordnen zum Identifikationskode des mobilen Sende-Empfangsgeräts der Netzwerkkartenadresse und der Netzwerkadresse des mobilen Sende-Empfangsgeräts durch das ortsfeste Sende-Empfangsgerät als dem Identifikationskode des mobilen Sende-Empfangsgeräts zugeordneter Wert,

Außerdem enthält das Verfahren zwischen Schritt iv) und v) die Schritte:
iv a)Empfangen des Identifikationskodes des ortsfesten Sende-Empfangsgeräts und des dem Identifikationskode des mobilen Sende-Empfangsgerät zugeordneten Wertes durch die Datenübertragungseinheit,
iv b)Aussenden des Identifikationskodes des ortsfesten Sende-Empfangsgeräts durch die Datenübertragungseinheit mit der zweiten Funktechnologie an die Netzwerkadresse des mobilen Sende-Empfangsgerätes.

Der technische Effekt dieser Ausführungsform ist, dass die Übertragung des Identifikationskodes des ortsfesten Sende-Empfangsgeräts an das mobile Sende-Empfangsgerät in einem Netzwerk stattfinden kann, weil sowohl dem ortsfesten als auch dem mobilen Sende-Empfangsgerät eine Netzwerkadresse und eine Netzwerkkartenadresse zukommen und sie dadurch im Netzwerk eindeutig adressierbar sind. Dadurch wird es dem Ortungssystem auf einfache Weise möglich mehrere mobile Sende-Empfangsgeräte zu bedienen, weil es mit der zweiten Funktechnologie innerhalb eines Netzwerks kommunizieren kann.

Bei einer weiteren Ausführungsvariante des Verfahrens zum Orten von mobilen Sende-Empfangsgeräten mit einem Ortungssystem enthält das Verfahren zusätzlich die Schritte:
vi) Abfragen von Informationen, wie Multimediadaten, welche dem empfangenen Identifikationskode des ortsfesten Sende-Empfangsgerät zugeordnet sind, durch das mobile Sende-Empfangsgerät über die Datenübertragungseinheit von einer Datenverarbeitungsanlage mit der zweiten Funktechnologie.

Der technische Effekt dieser Ausführungsvariante ist, das es einem Benutzer des mobilen Sende-Empfangsgeräts ermöglicht wird, Informationen abzurufen, welche vom Identifikationskode des ortsfesten Sende-Empfangsgerät abhängen und damit von der Position des mobilen Sende-Empfangsgeräts. So wird es möglich dem Benutzer über seine Position hinaus auch an den ort angepasste Inhalte wie Multimediadaten abzurufen.

Eine Datenverarbeitungsanlage ist meist als Standgerät ausgebildet und hat daher die Möglichkeit eine größere Menge an Daten zu speichern, als ein mobiles Gerät. In dieser Ausführungsform hat das mobile Sende-Empfangsgerät Zugriff auf diese größere Menge an Daten.

Die einfachste ortsspezifische Information, die auf der Datenverarbeitungsanlage abgelegt sein kann ist eine Positionsangabe. Somit kann die Datenverarbeitungsanlage einem jeweiligen Identifikationskode eines ortsfesten Sende-Empfangsgeräts eine Position zuordnen und die Information mit der zweiten Funktechnologie an das mobile Sende-Empfangsgerät übertragen.

Es sind viele weitere Inhalte denkbar, welche an das mobile Sende-Empfangsgerät übertragen werden könnten, wie z.B. Ausgaben von komplexen Datenbanken, welche nur auf einer Datenverarbeitungsanlage laufen können.

Bei einer bevorzugten Ausführungsvariante des Verfahrens zum Orten von mobilen Sende-Empfangsgeräten mit einem Ortungssystem ist
- die erste Funktechnologie eine Bluetooth-Funktechnologie, und
- die zweite Funktechnologie eine WLAN-Technologie.

Der Vorteil dieser Ausführungsvariante ist, dass Bluetooth-Module eine eindeutige Bluetooth-Device-Adresse haben. Diese kann als Identifikationskode dienen.

Die WLAN-Technologie ist zur Datenübertragung mit hohen Datenraten geeignet. Damit können auch Inhalte an das mobile Sende-Empfangsgerät übertragen werden, die hohe Datenraten erfordern, wie Multimediadaten, speziell Videoinhalte.

Ein weiterer Vorteil ergibt sich dadurch, dass die mobilen und die ortsfesten Sende-Empfangsgeräte ständig im Netzwerk angemeldet sind, dadurch ergibt sich eine hohe Reaktionsgeschwindigkeit für das Übertragen des Identifikationskodes des ortsfesten Sende-Empfangsgeräts an das mobile Sende-Empfangsgerät.

Bei einer weiteren Ausführungsvariante des Verfahrens zum Orten von mobilen Sende-Empfangsgeräten mit einem Ortungssystem ist
- die erste Funktechnologie WiFi zertifiziert.

Bei einem Ausführungsbeispiel des Verfahrens zum Orten von mobilen Sende-Empfangsgeräten ist der Identifikationskode des ortsfesten und des mobilen Sende-Empfangsgeräts eine im Bluetooth-Standard definierte Bluetooth-Device-Adresse BDADDR.

Dies hat den besagten Vorteil, dass die Bluetooth-Device-Adresse BDADDR für jedes Bluetooth-Modul eindeutig ist. Wenn die Bluetooth-Device-Adresse als Identifikationskode eingesetzt wird, sind alle mobilen sowie alle ortsfesten eindeutig identifizierbar.

Bei einer Ausführungsvariante des Verfahrens zum Orten von mobilen Sende-Empfangsgeräten mit einem Ortungssystem enthält das Verfahren vor dem ersten Schritt den Schritt
0i) einstellen der Reichweite der ersten Funktechnologie auf eine vorbestimmte Reichweite.

Der technische Effekt dieser Ausführungsvariante ist, dass die Entfernung, in welcher die mobilen Sende-Empfangsgeräte detektiert werden einstellbar ist. Damit lässt sich auch die Genauigkeit der Ortung einstellen. Bei einer dichteren Verteilung der ortsfesten Sende-Empfangsgeräte und kleinerer Empfangszellengröße wird die Genauigkeit erhöht.

Bei einem weiteren Ausführungsbeispiel enthält das Verfahren zum Orten von mobilen Sende-Empfangsgeräten mit einem Ortungssystem vor dem ersten Schritt den Schritt
0i) einstellen der Reichweite der ersten Funktechnologie auf eine vorbestimmte Reichweite zwischen 30 cm und 25 Meter.

Dies ist ein technisch gut realisierbarer Bereich.

Bei einem Ausführungsbeispiel des Verfahrens zum Orten von mobilen Sende-Empfangsgeräten mit einem Ortungssystem sind die Abfragesignale des ortsfesten Sende-Empfangsgeräts im Bluetooth-Standard definierte, dedizierte Zugangskodeanfragen (DIAC).

Der technische Effekt dieses Ausführungsbeispiels ist, dass nur die Geräte auf die dedizierten Zugangskodeanfragen mit dem Senden ihres Identifikationskodes antworten, die darauf eingestellt sind.

Dadurch antworten nur die mobilen Sende-Empfangsgeräte und nicht andere bluetoothfähige Geräte. So wird der Detektionsprozess ungestört durchgeführt und die ortsfesten Sende-Empfangsgeräte werden entlastet. Außerdem antworten die mobilen Sende-Empfangsgeräte nur auf diese dedizierten Zugangskodeanfragen der ortsfesten Sende-Empfangsgeräte. Dadurch wird erreicht, dass die mobilen Sende-Empfangsgeräte nicht durch andere Bluetooth-Geräte geortet werden können.

Dedizierte Zugangskodeanfragen stehen im Gegensatz zu globalen Zugangskodeanfragen (GIAC), auf welche alle bluetooth-fähigen Geräte antworten.

Bei einem Ausführungsbeispiel des Verfahrens zum Orten von mobilen Sende-Empfangsgeräten mit einem Ortungssystem enthält das Verfahren in allen Schritten, das Einsetzen der ersten Funktechnologie in einem anderen Zeitschlitz, als die zweite Funktechnologie.

Der technische Effekt dieses Ausführungsbeispiels ist, dass beide Funktechnologien im selben Frequenzband arbeiten können und sich nicht gegenseitig stören, weil sie nicht gleichzeitig eingesetzt werden.

Bei einem bevorzugten Ausführungsbeispiel des Verfahrens zum Orten von mobilen Sende-Empfangsgeräten mit einem Ortungssystem umfasst das Verfahren weiterhin die Schritte,
vi a)Versenden einer Anfrage, die den Identifikationskode des ortsfesten Sende-Empfangsgeräts enthält, mit der zweiten Funktechnologie durch das mobile Sende-Empfangsgerät, und
vii) Auslösen eines ortsspezifischen Ereignisses durch eine Ereignissteuereinheit.

Der technische Effekt dieses Ausführungsbeispiels ist, dass ein Ereignis an einem vorgegebenen Ort ausgelöst werden kann, wenn ein mobiles Sende-Empfangsgerät vom Ortungssystem detektiert wird.

Bei einem weiteren Ausführungsbeispiel des Verfahrens zum Orten von mobilen Sende-Empfangsgeräten mit einem Ortungssystem umfasst das Verfahren, anstatt den Schritten iii) und iv), die Schritte,
iii) Empfangen des Identifikationskodes des mobilen Sende-Empfangsgeräts durch das ortsfeste Sende-Empfangsgerät in einem Nachrichtensignal,
iii a) Messen der Signalstärke des Nachrichtensignals durch das ortsfeste Sende-Empfangsgerät,
iii b) Berechnen eines Entfernungswertes zwischen ortsfestem und mobilen Sende-Empfangsgerät anhand der gemessenen Signalstärke durch das ortsfeste Sende-Empfangsgerät, und
iv) Aussenden eines das ortsfeste Sende-Empfangsgerät charakterisierenden Identifikationskodes und eines dem Identifikationskode des mobilen Sende-Empfangsgerät zugeordneten Wertes und des berechneten Entfernungswertes durch das ortsfeste Sende-Empfangsgerät mit der zweiten Funktechnologie.

Der technische Effekt dieser Ausführungsform ist, dass die Positionsbestimmung genauer ist, als allein durch die Sichtung im Funkbereich eines ortsfesten Sende-Empfangsgeräts. Durch die Signalstärkemessung kann die Entfernung zwischen ortsfestem und mobilen Sende-Empfangsgerät ermittelt werden und nicht nur die Tatsache, dass man sich im Empfangsbereich eines ortsfesten Sende-Empfangsgeräts befindet. Dadurch wird die Positionsbestimmung auf einen kleineren Kreis reduziert.

Bei diesem Ausführungsbeispiel wird die Signalstärkemessung und Entfernungsbestimmung zwischen ortsfestem und mobilen Sende-Empfangsgerät vom ortsfesten Sende-Empfangsgerät durchgeführt. Dadurch kann die Signalstärkemessung auch durchgeführt werden, wenn das mobile Sende-Empfangsgerät keinen Signalstärkeauswertungsschaltkreis besitzt. Damit ist das Ortungssystem unabhängiger vom eingesetzten mobilen Sende-Empfangsgerät.

Bei einem weiteren Ausführungsbeispiel des Verfahrens zum Orten von mobilen Sende-Empfangsgeräten mit einem Ortungssystem umfasst das Verfahren weiterhin nach Schritt i) den Schritt:
i a) Bestimmen der Signalstärke des Abfragesignals und Berechnen der Entfernung zwischen mobilem und ortsfestem Sende-Empfangsgerät durch das mobile Sende-Empfangsgerät.

Der technische Effekt dieses Ausführungsbeispiels ist, dass das mobile Sende-Empfangsgerät selbst die Signalstärke messen kann und die Entfernung zwischen mobilem und ortsfestem Sende-Empfangsgerät bestimmen kann.

Bei einem Ausführungsbeispiel umfasst das Verfahren zum Orten von mobilen Sende-Empfangsgeräten mit einem Ortungssystem weiterhin nach Schritt i) die Schritte:
i a) Bestimmen der Signalstärke des Abfragesignals und Berechnen der Entfernung zwischen mobilem und ortsfestem Sende-Empfangsgerät durch das mobile Sende-Empfangsgerät.
i b) Empfangen eines weiteren Abfragesignals eines weiteren ortsfesten Sende-Empfangsgeräts durch das mobile Sende-Empfangsgerät,
i c) Bestimmen der Signalstärke des weiteren Abfragesignals, Berechnen der Entfernung zwischen mobilem und ortsfestem Sende-Empfangsgerät durch das mobile Sende-Empfangsgerät und genaueres Bestimmen der Position anhand der berechneten Entfernungen.

Dadurch wird es möglich, dass sich die Funkabdeckungsbereiche von ortsfesten Sende-Empfangsgeräten überschneiden, weil das mobile Sende-Empfangsgerät anhand der Signalstärke der empfangenen Abfragesignale messen kann, welchem ortsfesten Sende-Empfangsgerät es näher ist, wenn das mobile Sende-Empfangsgerät von zwei ortsfesten Sende-Empfangsgeräten gesichtet wird.

Bei einer Ausführungsvariante des Verfahrens zum Orten von mobilen Sende-Empfangsgeräten mit einem Ortungssystem umfasst das Verfahren weiterhin die Schritte:
vi) Prüfen anhand der bisher empfangenen und gespeicherten Identifikationskodes der ortsfesten Sende-Empfangsgeräte, ob es plausibel ist, dass man sich in der Nähe des ortsfesten Sende-Empfangsgerät befindet, von dem zuletzt der Identifikationskode empfangen wurde, durch das mobile Sende-Empfangsgerät.

Der technische Effekt dieser Ausführungsform ist, dass das mobile Sende-Empfangsgerät prüfen kann, ob es plausibel ist, dass es sich an einer bestimmten Position befindet, wenn es einen Identifikationskode eines ortsfesten Sende-Empfangsgeräts empfängt. Damit wird vermieden, dass das mobile Sende-Empfangsgerät seine Position falsch bestimmt, wenn es durch Zufall einem ortsfesten Sende-Empfangsgerät antwortet, obwohl es eigentlich noch nicht im Empfangsbereich dieses ortsfesten Sende-Empfangsgeräts ist. Dies kann geschehen, wenn sich z.B. durch Reflexionen der Signale der ersten Funktechnologie der Sende-Empfangsbereich vergrößert. Das mobile Sende-Empfangsgerät hat dabei mögliche Abfolgen von Identifikationskodes ortsfester Sende-Empfangsgeräte gespeichert und vergleicht die Abfolge mit den gespeicherten.

Die technische Aufgabe wird erfindungsgemäß durch ein Computerprogrammprodukt auf einem maschinenlesbaren Datenträger zum Einsatz auf einem mobilen Sende-Empfangsgerät, welches einen Prozessor, einen Speicher und ein erstes Funkmodul für eine erste Funktechnologie vergleichsweise geringer Reichweite und ein zweites Funkmodul für eine zweite Funktechnologie vergleichsweise großer Reichweite enthält und ein Display enthalten kann, gelöst.

Das erfindungsgemäße Computerprogrammprodukt führt auf dem mobilen Gerät die Schritte aus:
Auf der Systemebene:
   1. Aktivieren des ersten Funkmoduls in den Modus "dedizierte Identifikationsabfragen von extern zu suchen und mit einem das mobile Sende-Empfangsgerät charakterisierenden Identifikationskode beantworten",
   2. Aktivieren des zweiten Funkmoduls in den Modus "Empfangen von an das mobile Gerät adressierten Nachrichten und weiterleiten der adressierten Nachrichten an eine Anwendungsebene und versenden von Nachrichten, die von der Anwendungsebene versendet werden".
Auf der Anwendungsebene:
   1. Entgegennehmen von adressierten Nachrichten vom zweiten Funkmodul von der Systemsteuerungsebene,
   2. Extrahieren eines Identifikationskodes aus einer adressierten Nachricht, wenn die Nachricht einen Identifikationskode enthält,

Der technische Effekt des Computerprogrammprodukts ist, dass das mobile Gerät den Identifikationskode eines ortsfesten Sende-Empfangsgeräts empfängt, wenn es in die Funkreichweite der ersten Funktechnologie des ortsfesten Sende-Empfangsgeräts kommt.

Weiterhin führt das Computerprogrammprodukt auf dem mobilen Sende-Empfangsgerät in einem Ausführungsbeispiel die folgenden Schritte aus:
Auf der Anwendungsebene:
   3. Versenden einer Anfragenachricht, die den Identifikationskode aus der adressierten Nachricht enthält,
   4. Empfangen einer Multimediadatei, die Text- oder Audio- und/oder Videodaten enthält, und
   5. Ausgeben der Multimediadatei auf dem Display und/oder Audiodaten an einen audiogeeigneten Ausgang.

Der technische Effekt dieses Ausführungsbeispiels ist, dass Inhalte wie Multimediadateien, die an den Identifikationskode eines ortsfesten Sende-Empfangsgeräts und damit an den Standpunkt de mobilen Sende-Empfangsgeräts angepasst sind, wiedergegeben werden können.

Dabei können dem empfangenen Identifikationskode des ortsfesten Sende-Empfangsgeräts entweder vom mobilen Sende-Empfangsgerät oder von einer entfernten Datenverarbeitungsanlage passende Inhalte zugeordnet werden, welche dann vom mobilen Sende-Empfangsgerät abgefragt werden.

In einem Ausführungsbeispiel ist die erste Funktechnologie eine Bluetooth-Funktechnologie und die zweite Funktechnologie eine WLAN-Funktechnologie.

Das hat den Vorteil, dass die Identifikationskodes der mobilen sowie der ortsfesten Sende-Empfangsgeräte eine Bluetooth-Device-Adresse sind, welche für jedes Bluetooth-Modul eindeutig ist, und dass sowohl das mobile als auch das ortsfeste Sende-Empfangsgerät ständig im WLAN-Netzwerk angemeldet sind, wodurch sich eine hohe Reaktionsgeschwindigkeit für die Übertragung des Identifikationskodes des ortsfesten Sende-Empfangsgeräts ergibt. Weiterhin können in einem Netzwerk viele mobile und ortsfeste Sende-Empfangsgeräte verwaltet werden.

Bei einer Ausführungsvariante des Computerprogrammprodukts führt das Computerprogrammprodukt weiterhin die Schritte aus:
Auf der Systemebene:
   3. Versetzen des ersten Funkmoduls in den Modus "Messen der Signalstärke von empfangenen dedizierten Identifikationsanfragen und weiterleiten der gemessenen Signalstärke an die Anwendungsebene."
Auf der Anwendungsebene:
   3. Entgegennehmen eines Wertes der gemessenen Signalstärke von der Systemebene.
   4. Berechnen eines Entfernungswerts aus dem Wert der gemessenen Signalstärke.
   5. Bestimmen einer Position des mobilen Gerätes anhand des empfangenen Identifikationskodes und des Wertes der gemessenen Signalstärke.

Der Vorteil dieses Ausführungsbeispiels ist, dass die Position durch den das ortsfeste Sende-Empfangsgerät charakterisierenden Identifikationskode bestimmt werden kann und die Genauigkeit der Positionsbestimmung durch die Berechnung des Entfernungswerts aus der gemessenen Signalstärke vergrößert wird.

Bei einem weiteren Ausführungsbeispiel des Computerprogrammprodukts führt das Computerprogrammprodukt weiterhin die Schritte aus:
Auf der Anwendungsebene:
   3. Extrahieren eines weiteren Identifikationskodes aus einer weiteren adressierten Nachricht, wenn die Nachricht einen Identifikationskode enthält,
   4. Prüfen anhand der bisher empfangenen und gespeicherten Identifikationskodes der ortsfesten Sende-Empfangsgeräte, ob es plausibel ist, dass man sich in der Nähe des ortsfesten Sende-Empfangsgerät befindet, von dem zuletzt der Identifikationskode empfangen wurde, indem die Abfolge der empfangenen Identifikationskodes mit möglichen Abfolgen von Identifikationskodes, welche im Speicher abgelegt sind, verglichen wird.

Der technische Effekt dieser Ausführungsform ist, dass das mobile Sende-Empfangsgerät prüfen kann, ob es plausibel ist, dass es sich an einer bestimmten Position befindet, wenn es einen Identifikationskode eines ortsfesten Sende-Empfangsgeräts empfängt. Damit wird vermieden, dass das mobile Sende-Empfangsgerät seine Position falsch bestimmt, wenn es durch Zufall einem ortsfesten Sende-Empfangsgerät antwortet, obwohl es eigentlich noch nicht im Empfangsbereich dieses ortsfesten Sende-Empfangsgeräts ist. Dies kann geschehen, wenn sich z.B. durch Reflexionen der Signale der ersten Funktechnologie der Sende-Empfangsbereich vergrößert. Das mobile Sende-Empfangsgerät hat dabei mögliche Abfolgen von Identifikationskodes ortsfester Sende-Empfangsgeräte gespeichert und vergleicht die Abfolge mit den gespeicherten.

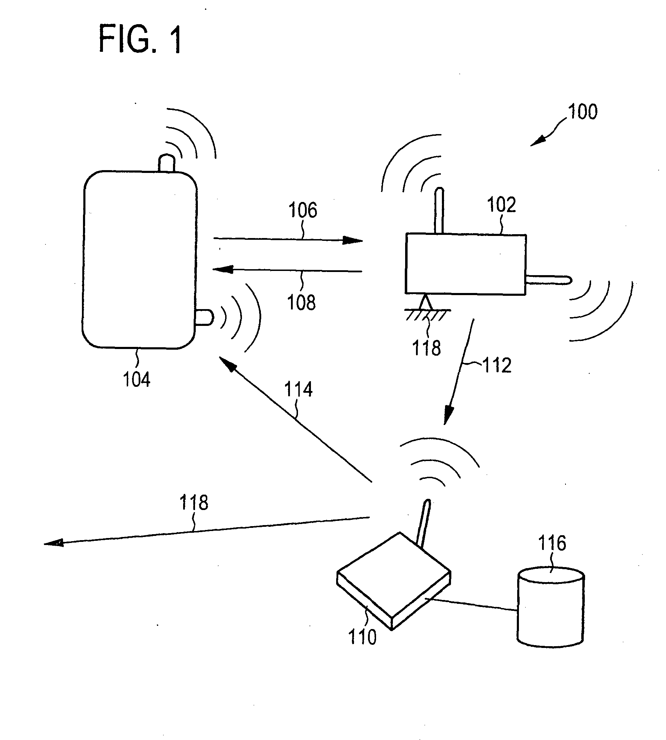

Figur 1 zeigt schematisch eine bevorzugte Ausführungsform des Ortungssystems 100 mit seinen zugehörigen Komponenten. Anhand Figur 1 wird das Zusammenwirken der einzelnen Komponenten in dieser bevorzugten Ausführungsform erläutert. Das Ortungssystem wird weiterhin auch mit Positionsbestimmungsanordnung bezeichnet.

Die Positionsbestimmungsanordnung 100 enthält in dieser Ausführungsform der Erfindung mindestens ein mobiles Sende-Empfangsgerät 104, ein ortsfestes Sende-Empfangsgerät 102, eine Datenübertragungseinheit 110 und eine Datenverarbeitungsanlage 116, welche einen Massendatenspeicher enthält.

Das ortsfeste Sende-Empfangsgerät ist an einer ortsfesten Struktur 118 befestigt und hat ein erstes Funkmodul einer ersten Funktechnologie, welches in dieser Ausführungsform ein Bluetooth-Modul mit einer vorbestimmten Funkreichweite ist. Dadurch ist die Größe und Position der Funkzelle, in welcher das ortsfeste Sende-Empfangsgerät über die Bluetooth-Technologie erreichbar ist über die Funkreichweite und ihren Aufstellort definiert. In einem realen Anwendungsfall enthält das Ortungssystem viele ortsfeste Sende-Empfangsgeräte an verschiedenen Orten.

Das ortsfeste Sende-Empfangsgerät 102 enthält weiterhin ein zweites Funkmodul, welches in dieser Ausführungsform ein drahtloses Local-Area-Network-Modul kurz WLAN-Modul ist. Mit dem WLAN-Modul kann das ortsfeste Sende-Empfangsgerät 102 mit der Datenübertragungseinheit 110 kommunizieren.

Die Datenübertragungseinheit 110 ist in dieser Ausführungsform ein Netzzugriffspunkt, welcher auch als WLAN-Access-Point bezeichnet wird. Die Datenübertragungseinheit enthält auch ein zweites Funkmodul. Sie funktioniert in erster Linie als drahtloser Router. Als Router wird ein Gerät bezeichnet, welches TCP/IP-Pakete in einem Netzwerk von einem Gerät mit einer eindeutigen IP-Adresse empfangen kann. Der Router sendet das TCP/IP-Paket an das Gerät mit derjenigen IP-Adresse, an welche das TCP/IP-Paket adressiert ist.

In dieser Ausführungsform befinden sich alle Komponenten in einem drahtlosen Netzwerk (WLAN) und besitzen eine eindeutige IP-Adresse. Diese IP-Adresse kann sowohl statisch zugewiesen sein als auch dynamisch zugewiesen werden. Dem Fachmann ist bekannt, wie das dynamische Zuweisen von IP-Adressen durch einen DHCP-Server (Dynamic Host Configuration Protocol Server) geschieht. Die Datenübertragungseinheit kann im Netzwerk die DHCP-Funktionalität haben.

Ein WLAN-Access-Point kann zusätzlich verschiedene Netzwerktechnologien miteinander verbinden. So kann die Datenübertragungseinheit in einer Ausführungsform sowohl drahtlos mit der zweiten Funktechnologie kommunizieren, als auch drahtgebunden sogenanntes LAN. In einer Ausführungsform ist die Datenübertragungseinheit über ein Netzwerkkabel mit der Datenverarbeitungsanlage 116 verbunden. Auch die Datenverarbeitungsanlage 116 hat dabei eine eindeutige IP-Adresse. Der WLAN-Access-Point ist der sog. Master im Drahtlosnetzwerk, übernimmt also die Kanalpflege, die mobilen Sende-Empfangsgeräte und die ortsfesten Sende-Empfangsgeräte sind die sog. Clients, welche sich beim Master anmelden und eine eindeutige IP-Adresse im Netzsegment haben. Die Clients werden über ihre eindeutige MAC-Adresse, also Netzwerkkartenadresse identifiziert, welche an die Hardware gebunden ist.

Das Ortungssystem kann viele verteilte WLAN-Access-Points enthalten, welche über die WLAN-Technologie miteinander in Verbindung stehen und Pakete an andere WLAN-Access-Points weiterreichen, sog. Bridgeing. Dadurch wird erreicht, dass ein größeres Funkabdeckungsgebiet erzeugt wird, wobei ein TCP/IP-Paket von einem WLAN-Access-Point drahtlos zum Nächsten weitergegeben wird, bis es das Gerät erreicht, an welches das Paket adressiert ist. Somit kann ein mobiles Sende-Empfangsgerät vom Empfangsbereich des einen WLAN-Access-Points zum Empfangsbereich des nächsten nahtlos wechseln, sog. Roaming. Somit können große Gebiete mit einem WLAN-Netzwerk abgedeckt werden. Der WLAN-Access-Point steht somit stellvertretend für eine Vielzahl von WLAN-Access-Points.

Das mobile Sende-Empfangsgerät 104 enthält auch ein erstes Funkmodul für die erste Funktechnologie, welche in dieser Ausführungsform die Bluetooth-Technologie ist. Weiterhin enthält das mobile Sende-Empfangsgerät ein zweites Funkmodul für die zweite Funktechnologie, welche in dieser Ausführungsform eine WLAN-Technologie ist. Weiterhin besitzt das mobile Sende-Empfangsgerät ein Display zum Anzeigen von Informationen wie Html-Seiten oder Videos. Zur Ausgabe von Audio-Daten kann es zudem einen Kopfhörerausgang oder einen Lautsprecher enthalten. Das Ortungssystem 100 kann dabei viele mobile Sende-Empfangsgeräte enthalten und orten. Das mobile Sende-Empfangsgerät steht also stellvertretend für eine größere Anzahl.

So können alle Teilnehmer, hier die mobilen, die ortsfesten Sende-Empfangsgeräte und die Datenverarbeitungsanlage über die Datenübertragungseinheit (Router) miteinander kommunizieren.

Auf der Datenverarbeitungsanlage 116 sind in einem Massenspeicher abrufbare Daten gespeichert und werden über einen Dienst, welcher sich Netzwerkserver oder WEB-Server nennt, im Netzwerk für alle Teilnehmer zur Verfügung gestellt. Die häufigste Form solcher Daten sind Informationen, welche für die Benutzer der mobilen Sende-Empfangsgeräte von Interesse sind. Solche Informationen können als Beispiel Html-Seiten, sogenannte WEB-Sites sein, welche ortsspezifische Information enthalten und Verknüpfungen zu anderen Inhalten, sogenannte Links, enthalten, welche es ermöglichen zu anderen Inhalten wie Audio-Dateien, anderen WEB-Sites oder Video-Dateien zu navigieren. Diese anderen Inhalte können auch ortsspezifisch sein und auf einer jeweiligen zu einem Standort passenden Navigations-Seite als Links zusammengestellt sein.

Im Folgenden wird das Zusammenwirken der Komponenten des Netzwerks näher erläutert. Das ortsfeste Sende-Empfangsgerät sendet, wenn es angeschaltet ist, ständig Abfragesignale 108 mit dem ersten Funkmodul aus. Die Abfragesignale 108 sind im Bluetooth-Standard definierte Identifikationsanfragen 108, sogenannte Inquiries 108. Das ortsfeste Sende-Empfangsgerät befindet sich also in einem Identifikationsanfragemodus, sog. Inquiry State. Diese Identifikationsanfragen sind direkt übersetzt Anfragezugangskodes (Inquiry Access Code) 108.

Für den Anfragezugangskode (IAC) gibt es zwei Varianten. Einen allgemeinen Anfragezugangscode (GIAC-general inquiry access code), welcher für alle Einheiten gleich ist und einen eingeschränkten Anfragezugangskode (DIAC-dedicated inquiry access code), für eine bestimmte Gruppe von Bluetootheinheiten, mit gleicher Eigenschaft. Das GIAC kann verwendet werden, um zu detektieren, welche anderen Bluetootheinheiten in Reichweite sind. Der DIAC kann benutzt werden, um nur diese bestimmten Bluetootheinheiten, die in Reichweite sind, zu finden.

In dieser Ausführungsform wird der eingeschränkte Anfragezugangskode (DIAC) ausgesendet. Dadurch wird erreicht, das nur die Geräte die Identifikationsanfragen beantworten, welche die Sende-Empfangsgeräte sind, die geortet werden sollen. Es wird somit verhindert, dass andere bluetoothfähige Geräte den ortsfesten Sende-Empfangsgeräten antworten. Die zu ortenden Sende-Empfangsgeräte enthalten entsprechend eingestellte Bluetootheinheiten.

Das mobile Sende-Empfangsgerät 104 befindet sich in einem Anfragesuchmodus, sog. Inquiry Scan (DIAC). Das mobile Sende-Empfangsgerät empfängt in diesem Modus den Anfragezugangskode des ortsfesten Sende-Empfangsgeräts. Das mobile Sende-Empfangsgerät beantwortet dann die Identifikationsanfrage des ortsfesten Sende-Empfangsgeräts mit einer Anfrageantwort 106, sog. Inquiry Response 106 mit der ersten Funktechnologie, in diesem Fall Bluetooth. Diese Anfrageantwort 106 ist ebenfalls im -Bluetooth-Standard definiert. Die Anfrageantwort 106 enthält den das mobile Sende-Empfangsgerät charakterisierenden Identifikationskode.

Das mobile Sende-Empfangsgerät ist dabei so eingestellt, dass es nur die Identifikationsanfragen des ortsfesten Sende-Empfangsgeräts beantwortet, und nicht die Identifikationsanfragen anderer Bluetootheinheiten, welche sich auch im Identifikationsanfragemodus befinden. Damit wird eine gewisse Anonymität der mobilen Sende-Empfangsgeräte erreicht, weil sie nicht durch andere Geräte geortet werden können.

Als nächstes empfängt das ortsfeste Sende-Empfangsgerät die Anfrageantwort 106. Damit befindet sich das ortsfeste Sende-Empfangsgerät im Besitz des eindeutigen Identifikationskodes BDADDR des mobilen Sende-Empfangsgeräts, der sog. Bluetooth-Device-Adresse.

Das ortsfeste Sende-Empfangsgerät überträgt diesen Identifikationskode zu einer Anwendungsebene, welche diesen Identifikationskode in eine IP-Adresse des mobilen Sende-Empfangsgeräts in diesem WLAN-Netzwerk wandelt. Dies kann auf verschiedene Weise geschehen, entweder ist im ortsfesten Sende-Empfangsgerät eine Zuordnungstabelle gespeichert, welche Identifikationskodes aller eingesetzten mobilen Sende-Empfangsgeräte IP-Adressen zuordnet. Diese Zuordnungstabelle muss dann regelmäßig aktualisiert werden, z.B. durch eine Anfrage bei der Datenverarbeitungsanlage. Die andere Möglichkeit wäre, dass das ortsfeste Sende-Empfangsgerät eine Anfrage bei der Datenverarbeitungseinheit für die Zuordnung stellt und als Antwort die IP-Adresse erhält.

Das ortsfeste Sende-Empfangsgerät sendet dann über WLAN ein TCP/IP-Paket, welches den das ortsfeste Sende-Empfangsgerät charakterisierenden Identifikationskode enthält, an die IP-Adresse des mobilen Sende-Empfangsgeräts.

Der WLAN-Access-Point 110 empfängt diese TCP/IP-Paket und sendet es weiter an das mobile Sende-Empfangsgerät 104.

Das mobile Sende-Empfangsgerät empfängt das TCP/IP-Paket mit dem Identifikationskode des ortsfesten Sende-Empfangsgeräts und wandelt den Identifikationskode mit Hilfe eines Programms in eine Position. Dies kann entweder so geschehen, dass es ebenfalls eine weitere Zuordnungstabelle gespeichert hat, welche die Identifikationskodes aller ortsfesten Sende-Empfangsgeräte Positionen zuordnet, oder es stellt eine Anfrage an die Datenverarbeitungseinheit über WLAN, wo die Zuordnungstabelle zentral gespeichert ist. Das mobile Sende-Empfangsgerät ist nun im Besitz der Information, wo es sich befindet. Diese Information kann eine Positionsidentifikationsnummer sein oder eine URL oder einfach der Identifikationskode (Bluetooth-Device-Adresse) des ortsfesten Sende-Empfangsgeräts. In diesem Fall gehen wir davon aus, dass die Standortinformation in Form einer URL vorliegt. Eine URL englisch Uniform Resource Locator (URL, engl. "einheitlicher Quellenanzeiger") zeigt z.B. auf eine Website.

Mittels dieser URL stellt das mobile Sende-Empfangsgerät über WLAN eine Anfrage an die Datenverarbeitungseinheit, auf welcher ein Webserver läuft, welcher diese HTTP basierte Website mittels TCP/IP-Paketen über WLAN an das mobile Sende-Empfangsgerät sendet.

Das mobile Sende-Empfangsgerät zeigt die Website in einer Browserapplikation an. Die Website enthält Informationen, welche zu dem Standort gehören, an dem das ortsfeste Sende-Empfangsgerät das mobile detektiert oder "gesichtet" hat.

So kann z.B. in einem Museumsszenario immer die passende Information von dem mobilen Sende-Empfangsgerät angezeigt werden.

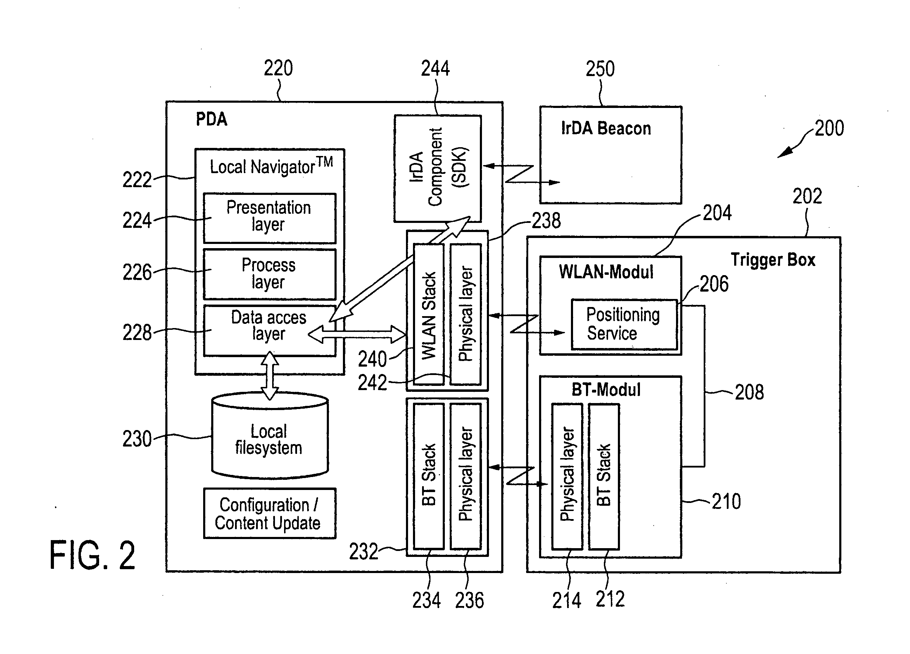

Fig. 2 zeigt exemplarisch eine mögliche Ausführungsform des Aufbaus der Software-Komponenten des Ortungssystems 200. Die Anordnung enthält ein mobiles Sende-Empfangsgerät 220, in diesem Fall ein PDA (Personal Digital Assistant), ein ortsfestes Sende-Empfangsgerät 202, im Weiteren auch als Triggerbox bezeichnet, und ein Infrarot-Sende-Empfangsgerät 250 oder Infrarotleuchtfeuer 250, im Weiteren auch IrDA Beacon bezeichnet. Die Anordnung eignet sich, um den PDA 220 zu orten, wenn er sich in der Nähe, also im Empfangsbereich der Triggerbox 202 befindet.

Die Triggerbox besteht aus einem Bluetooth-Modul 210 einem WLAN-Modul 204, die über eine UART-Verbindung 208 miteinander verbunden sind. Das Bluetooth Modul hat eine physikalische Software-Ebene (Physical Layer), welche für die physikalische Funkverbindung verantwortlich ist, und einen sog. Bluetooth-Stack, welcher für die Bereitstellung von Softwaretreibern und den Datenaustausch mit anderen Modulen verantwortlich ist. Das Bluetooth-Modul des PDA hat den selben Sofware-Aufbau. Das WLAN-Modul enthält in diesem Ausführungsbeispiel eine Positionsbestimmungs-Applikation 206, welche für die Wandelung der empfangenen Bluetooth-Device-Adresse in eine Netzwerkkartenadresse und eine Netzwerkadresse zuständig ist.

Das PDA 220 hat ebenfalls ein Bluetooth-Modul 232, welches die selben Software-Komponenten, Bluetooth-Stack 234 und Physical Layer 236, enthält. Das WLAN-Modul des PDA enthält eine Software-Komponente für die physikalische Ebene 242, Physical Layer, und einen WLAN-Stack 240, welcher für den Datenaustausch mit anderen Software-Komponenten verantwortlich ist.

Im Betrieb sendet die Triggerbox mit dem Bluetooth-Modul durchgehend dedizierte Identifikationsanfragen. Das in Funkreichweite befindliche PDA beantwortet diese Anfrage mit einer Identifikationsantwort (Inquiry-Response-Paket). Die Triggerbox empfängt diese Identifikationsantwort und leitet die in der Identifikationsantwort enthaltene Bluetooth-Device-Adresse des PDA über die UART-Schnittstelle 208 an das WLAN-Modul 204 weiter. Die Positionsbestimmungs-Applikation 206 im WLAN-Modul wandelt die Bluetooth-Device-Adresse in die MAC-Adresse und die IP-Adresse des WLAN-Moduls 238 des PDA. Das WLAN-Modul 204 der Triggerbox sendet dann die Bluetooth-Device-Adresse der Triggerbox logisch an das WLAN-Modul 238 des PDA. Logisch senden bedeutet, dass das WLAN-Modul 204 der Triggerbox ein Daten-Paket mit der Netzwerkadresse und der Netzwerkkartenadresse des WLAN-Moduls im Header des Pakets versendet, ein nicht dargestellter WLAN-Access-Point das Paket weiterleitet, und das WLAN-Modul 238 des PDA das Paket empfängt, weil sich im Paket-Header die richtige Netzwerkadresse und die richtige Netzwerkkartenadresse befindet. Der Inhalt des Pakets enthält die Bluetooth-Device-Adresse des Bluetooth-Moduls 210 der Triggerbox 202.

Der Inhalt des Pakets wird an die Datenzugriffsebene 228, sog. Data Access Layer, einer Software des PDA geleitet. Die Datenzugriffsebene 228 gibt den Inhalt mit der Bluetooth-Device-Adresse an ein wartendes Navigationsprogramm in der Prozessebene 226 des PDA weiter. Das Navigationsprogramm wandelt die Bluetooth-Device-Adresse der Triggerbox in eine auszuführende Aktion um. Diese Aktion ist in diesem Fall das Aufrufen einer Web-Site aus dem lokalen Dateisystem 230. Deshalb fragt die Prozessebene 226 die Web-Site über die Datenzugriffsebene 228 aus dem lokalen Dateisystem 230 ab und übergibt sie der Präsentationsebene 224. Die Präsentationsebene 224 stellt eine Art Browser zur Verfügung und stellt die Web-Site im Browser dar.

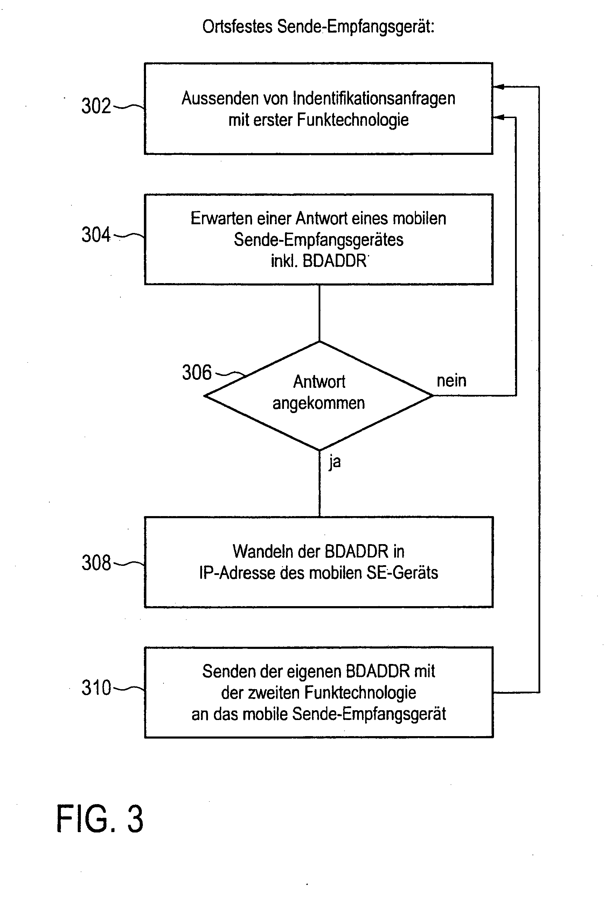

Figur 3 zeigt ein Ablaufdiagramm eines Ausführungsbeispiels der Arbeitsweise eines ortsfesten Sende-Empfangsgeräts. Das ortsfeste Sende-Empfangsgerät führt folgende Schritte aus:
- 302:: Kontinuierliches Aussenden von Identifikationsanfragen mit der ersten Funktechnologie.
- 304:: Erwarten einer Antwort eines mobilen Sende-Empfangsgeräts inklusive der Bluetooth-Device-Adresse BDADDR.
- 306:: Wenn eine Antwort eines mobilen Sende-Empfangsgeräts empfangen wurde, weitergehen zu Schritt 308 (Strang ja)
Wenn keine eines mobilen Sende-Empfangsgeräts empfangen wurde, zurückspringen zu Schritt 302.
- 308:: Wandeln der Bluetooth-Device-Adresse BDADDR in die IP-Adresse des mobilen Sende-Empfangsgeräts.
- 310:: Senden der eigenen Bluetooth-Device-Adresse BDADDR mit der zweiten Funktechnologie an das mobile Sende-Empfangsgerät.

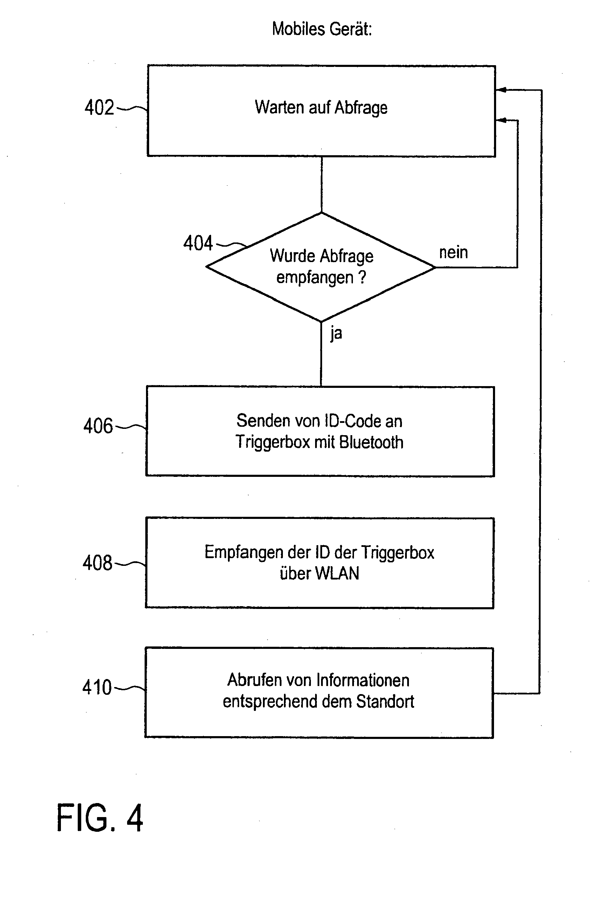

- Figur 4: zeigt ein Ablaufdiagramm eines Ausführungsbeispiels der Arbeitsweise eines mobilen Sende-Empfangsgeräts. Das mobile Sende-Empfangsgerät führt folgende Schritte aus:
- 402:: Warten auf eine Abfrage zum Senden des Identifikationskodes der ersten Funktechnologie von einem ortsfesten Sende-Empfangsgerät. Diese Abfrage wird auch mit Identifikationsabfrage bezeichnet.
- 404:: Wenn eine Abfrage empfangen wurde, weitergehen zu Schritt 406 (Strang ja).
Wenn keine Abfrage empfangen wurde, zurückspringen zu Schritt 402 (Strang nein).
- 406:: Senden der Bluetooth-Device-Adresse BDADDR mit der ersten Funktechnologie, die in diesem Ausführungsbeispiel die Bluetooth Technologie ist, an das ortsfeste Sende-Empfangsgerät.
- 408:: Empfangen der Bluetooth-Device-Adresse BDADDR des ortsfesten Sende-Empfangsgeräts.
- 410:: Abrufen von Informationen, die dem Standort entsprechen. Dazu wird die Bluetooth-Device-Adresse BDADDR zur Identifikation des Standorts verwendet. Zurückspringen zu Schritt 402.

## Patentansprüche

1. Ortungssystem (100, 200) zum Bestimmen einer Position mindestens eines mobilen Sende-Empfangsgeräts (104, 220), wobei das Ortungssystem (100, 200) neben dem mobilen Sende-Empfangsgerät (104, 220) mindestens ein ortsfestes Sende-Empfangsgerät (102, 202), welches ausgebildet ist, im Betrieb an einem vorbestimmten Ort (118) zu sein, enthält,
wobei sowohl das ortsfeste (102,202) als auch das mobile Sende-Empfangsgerät (104, 220) sowohl ein erstes Funkmodul (210, 232) für eine erste Funktechnologie vergleichsweise geringer Reichweite als auch ein zweites Funkmodul (204, 238) für eine zweite Funktechnologie vergleichsweise hoher Reichweite und eine Steuereinheit, die mit den Funkmodulen (204, 210; 232, 238) verbunden ist, enthalten und ausgebildet sind, sowohl über die erste Funktechnologie als auch über die zweite Funktechnologie zu kommunizieren, und
das ortsfeste Sende-Empfangsgerät (102, 202) ausgebildet ist, mit der ersten Funktechnologie kontinuierlich Abfragesignale (108) zur Abfrage eines jeweiligen Identifikationskodes des mobilen Sende-Empfangsgeräts (104, 220) auszusenden,
das mobile Sende-Empfangsgerät (104, 220) ausgebildet ist, die Abfragesignale (108) zu empfangen und
unmittelbar nach Empfang mindestens eines Abfragesignals (108) einen das mobile Sende-Empfangsgerät (104, 220) charakterisierenden Identifikationskode mit der ersten Funktechnologie zu senden, und
das ortsfeste Sende-Empfangsgerät (102, 202) ausgebildet ist, den Identifikationskode mit der ersten Funktechnologie zu empfangen,
**dadurch gekennzeichnet, dass**
das ortsfeste Sende-Empfangsgerät (102, 202) ausgebildet ist nach dem Empfang des Identifikationskodes des mobilen Sende- Empfangsgeräts (104, 220) mindestens einen das ortsfeste Sende-Empfangsgerät (102, 202) charakterisierenden Identifikationskode mit der zweiten Funktechnologie logisch an das mobile Sende-Empfangsgerät (104, 220) zu übertragen.

2. Ortungssystem (100, 200) nach Anspruch 1, welches außerdem mindestens eine von den Sende- Empfangsgeräten (102, 202; 104 220) unterschiedliche Datenübertragungseinheit (110) zur drahtlosen Übertragung von Daten enthält, die ausgebildet ist, mit der zweiten Funktechnologie zu kommunizieren, wobei das ortsfeste Sende-Empfangsgerät (102, 202) ausgebildet ist, beim Empfang des Identifikationskodes des mobilen Sende- Empfangsgeräts (104, 220) den das ortsfeste Sende-Empfangsgerät (102, 202) charakterisierenden Identifikationskode mit der zweiten Funktechnologie an die Datenübertragungseinheit (110) zu übertragen, wobei die Datenübertragungseinheit (110) als Master eingesetzt wird und das ortsfeste (102, 202) sowie das mobile Sende-Empfangsgerät (104, 220) als Clients.

3. Ortungssystem (100, 200) nach Anspruch 2, wobei sowohl das ortsfeste (102, 202) als auch das mobile Sende-Empfangsgerät (104, 220) innerhalb der zweiten Funktechnologie eine eindeutige Netzwerkkartenadresse und eine Netzwerkadresse besitzen und das ortsfeste Sende-Empfangsgerät (102, 202) ausgebildet ist, den Identifikationskode des mobilen Sende-Empfangsgeräts (104, 220) in seine Netzwerkkartenadresse und eine zugehörige Netzwerkadresse des mobilen Sende-Empfangsgeräts (104, 220) zu wandeln und
den Identifikationskode des ortsfesten Sende- Empfangsgeräts (102, 202) und die Netzwerkadresse des mobilen Sende-Empfangsgeräts (104, 220) mit der zweiten Funktechnologie an die Datenübertragungseinheit (110) zu senden, welche ausgebildet ist,
mittels der Netzwerkadresse des mobilen Sende- Empfangsgeräts (104, 220) den Identifikationskode des ortsfesten Sende- Empfangsgeräts (102, 202) an das mobile Sende-Empfangsgerät (104, 200) zu übertragen.

4. Ortungssystem (100, 200) nach Anspruch 3, wobei die Datenübertragungseinheit (110) ein Drahtlosnetzwerkzugriffspunkt (WLAN Access Point) ist.

5. Ortungssystem (100, 200) nach einem der Ansprüche 2 bis 4, das eine Datenverarbeitungsanlage (116) enthält, welche mit der Datenübertragungseinheit (110) verbunden ist und abrufbare ortsspezifische Daten enthält, wobei das mobile Sende-Empfangsgerät (104, 220) ausgebildet ist, anhand des mit der zweiten Funktechnologie empfangenen Identifikationskodes des ortsfesten Sende-Empfangsgeräts (102, 202) die ortsspezifischen Daten mit der zweiten Funktechnologie von der Datenverarbeitungsanlage (116) über die Datenübertragungseinheit (110) abzurufen und
die Datenverarbeitungsanlage (116) ausgebildet ist, auf Anfrage des mobilen Sende-Empfangsgeräts (104, 220) ortsspezifische Daten über die Datenübertragungseinheit (110) an das mobile Sende-Empfangsgerät (104, 220) zu übertragen.

6. Ortungssystem (100, 200) nach Anspruch 3 oder 4, wobei die Datenübertragungseinheit (110) mit einer Datenverarbeitungsanlage (116) verbunden ist, welche abrufbare Daten enthält, die jeweils über einen Identifikationskode eines ortsfesten Sende-Empfangsgeräts (102, 202) abrufbar sind, wobei das mobile Sende-Empfangsgerät (104, 220) ausgebildet ist, innerhalb einer Anfrage mit der zweiten Funktechnologie nach ortsspezifischen Daten den Identifikationskode des ortsfesten Sende-Empfangsgeräts (102, 202) über die Datenübertragungseinheit (110) an die Datenverarbeitungsanlage (116) zu übertragen,
wobei die Datenverarbeitungsanlage (116) weiterhin ausgebildet ist, die Netzwerkadresse des mobilen Sende-Empfangsgeräts (104, 220) und den Identifikationskode des ortsfesten Sende- Empfangsgeräts (102, 202) von der Datenübertragungseinheit (110) zu empfangen und in der Datenverarbeitungsanlage (116) abgelegte für den Identifikationskode des ortsfesten Sende- Empfangsgeräts (102, 202) spezifischen Daten zuzuordnen und an das mobile Sende- Empfangsgerät (104, 220) mittels der Netzwerkadresse des mobilen Sende-Empfangsgeräts (103, 220) über die Datenübertragungseinheit (110) zu übertragen.

7. Ortungssystem (100, 200) nach Anspruch 3 oder 4, wobei die Datenübertragungseinheit (110) an eine Datenverarbeitungsanlage (116) angeschlossen ist,
und das mobile Sende-Empfangsgerät (104, 220) ausgebildet ist, anhand des Identifikationskodes des ortsfesten Sende-Empfangsgeräts (102, 202) ortsspezifische Daten zuzuordnen und eine Anfrage nach den ortsspezifischen Daten über die Datenübertragungseinheit (110) an die Datenverarbeitungsanlage (116) zu übertragen,
welche ausgebildet ist, die Netzwerkadresse des mobilen Sende-Empfangsgeräts (104, 220) und die Anfrage des mobilen Sende-Empfangsgeräts (104, 220) nach den ortsspezifischen Daten von der Datenübertragungseinheit (110) zu empfangen
und die in der Datenverarbeitungsanlage (116) abgelegten ortsspezifischen Daten an das mobile Sende- Empfangsgerät (104, 220) mittels der Netzwerkadresse des mobilen Sende-Empfangsgeräts (104, 220) über die Datenübertragungseinheit (110) zu übertragen.

8. Ortungssystem (100, 200) nach Anspruch 3 oder 4, wobei die Steuereinheit des mobilen Sende-Empfangsgeräts (104, 220) einen Speicher (230) enthält, in welchem Identifikationskodes von ortsfesten Sende-Empfangsgeräten (102, 202) zu räumlichen Positionen zugeordnet gespeichert sind und die Steuereinheit ausgebildet ist, dem empfangenen Identifikationskode des ortsfesten Sende-Empfangsgerät (102, 202) eine räumliche Position zuzuordnen.

9. Ortungssystem (100, 200) nach Anspruch 3, wobei das ortsfeste Sende- Empfangsgerät (102, 202) ausgebildet ist, den Identifikationskode des mobilen Sende-Empfangsgeräts (104, 220) an die Datenverarbeitungsanlage (116) über die Datenübertragungseinheit (110) zu senden und
anhand des Identifikationskodes des mobilen Sende-Empfangsgeräts (104, 220), eine Netzwerkkartenadresse und eine zugehörige Netzwerkadresse des mobilen Sende-Empfangsgeräts (104, 220) über die Datenübertragungseinheit (110) von der Datenverarbeitungsanlage abzurufen (116),
welche ausgebildet ist, den empfangenen Identifikationskode des mobilen Sende-Empfangsgeräts (104, 220) der Netzwerkkartenadresse und der zugehörigen Netzwerkadresse zuzuordnen und über die Datenübertragungseinheit (110) an das ortsfeste Sende-Empfangsgerät (102, 220) zu übertragen.

10. Ortungssystem (100, 200) nach einem der Ansprüche 5, 6 oder 7, wobei die Datenverarbeitungsanlage (116) ein Funkmodul für die zweite Funktechnologie enthält und ausschließlich drahtlos mit der Datenübertragungseinheit (110) verbunden ist.

11. Ortungs-Sende-Empfangsgerät zur Verwendung als ortsfestes Ortungs-Sende-Empfangsgerät (102, 202) an einem vorbestimmten Ort zum Orten von mobilen Sende-Empfangsgeräten (104, 220), welches ein erstes Funkmodul (210) zum Senden und Empfangen mit einer ersten Funktechnologie vergleichsweise geringer Sende- bzw. Empfangsreichweite und ein zweites Funkmodul (204) zum Senden und Empfangen mit einer zweiten Funktechnologie vergleichsweise hoher Reichweite, eine Steuereinheit enthält, und die Steuereinheit mit dem ersten und dem zweiten Funkmodul verbunden ist, wobei
das Ortungs-Sende-Empfangsgerät ausgebildet ist, über die erste Funktechnologie und über die zweite Funktechnologie zu kommunizieren und
mit dem ersten Funkmodul (210) mit der ersten Funktechnologie kontinuierlich Abfragesignale zur Abfrage von Identifikationskodes mobiler Sende-Empfangsgeräte (104, 200) auszusenden,
wobei die Abfragen ein in die Funkreichweite der ersten Funktechnologie des Ortungs-Sende-Empfangsgeräts eintretendes mobiles Sende-Empfangsgerät (104, 220) veranlassen seinen Identifikationskode mit der ersten Funktechnologie an das Ortungs-Sende-Empfangsgerät zu senden, und
das Ortungs-Sende-Empfangsgerät ausgebildet ist, den Identifikationskode mit dem ersten Funkmodul (210) mit der ersten Funktechnologie zu empfangen,
**dadurch gekennzeichnet, dass**
das Ortungs-Sende-Empfangsgerät ausgebildet ist, unmittelbar nach dem Empfang des Identifkationskodes des mobilen Sende-Empfangsgeräts (104, 220) einen das ortsfeste Sende-Empfangsgerät (102, 202) charakterisierenden Identifikationskode mit dem zweiten Funkmodul (206) mit der zweiten Funktechnologie logisch an das mobile Sende-Empfangsgerät (104, 220) zu übertragen.

12. Verfahren zum Orten von mobilen Sende-Empfangsgeräten (104, 220) mit einem Ortungssystem (100, 200), welches mindestens ein ortsfestes Sende-Empfangsgerät (102, 202) enthält, wobei sowohl das ortsfeste Sende-Empfangsgerät (102, 202) als auch das mobile Sende-Empfangsgerät (104, 220) sowohl mit einer ersten Funktechnologie vergleichsweise geringer Reichweite als auch einer zweiten Funktechnologie vergleichsweise hoher Reichweite kommunizieren können, umfassend die Schritte:
i) Kontinuierliches Aussenden von Abfragesignalen mit der ersten Funktechnologie (302) zum Abfragen eines Identifikationskodes des mobilen Sende-Empfangsgeräts durch das ortsfeste Sende-Empfangsgerät und Empfangen mindestens eines Abfragesignals (402, 404) durch das mobile Sende-Empfangsgerät,
ii) Antworten durch Aussenden des Identifikationskodes des mobilen Sende-Empfangsgeräts mit der ersten Funktechnologie (406) nach Empfang mindestens eines Abfragesignals (404) des ortsfesten Sende-Empfangsgeräts durch das mobile Sende-Empfangsgerät,
iii) Empfangen des Identifikationskodes des mobilen Sende-Empfangsgeräts (304, 306) durch das ortsfeste Sende-Empfangsgerät,
**gekennzeichnet durch** die Schritte:
iv) Aussenden eines das ortsfeste Sende-Empfangsgerät charakterisierenden Identifikationskodes und eines dem Identifikationskode des mobilen Sende-Empfangsgerät zugeordneten Wertes **durch** das ortsfeste Sende-Empfangsgerät mit der zweiten Funktechnologie (310),
v) Empfangen des Identifikationskodes des ortsfesten Sende-Empfangsgeräts durch das mobile Sende-Empfangsgerät mit der zweiten Funktechnologie (408).

13. Verfahren zum Orten von mobilen Sende-Empfangsgeräten (104, 220) mit einem Ortungssystem (100, 200) nach Anspruch 12, wobei das Ortungssystem (100, 200) weiterhin eine Datenübertragungseinheit (110) enthält und das Verfahren zwischen Schritt iv) und v) weiterhin die Schritte enthält:
iv a)Empfangen des Identifikationskodes des ortsfesten Sende-Empfangsgeräts und des dem Identifikationskode des dem mobilen Sende-Empfangsgerät zugeordneten Wertes durch die Datenübertragungseinheit,
iv b)Aussenden des Identifikationskodes des ortsfesten Sende-Empfangsgeräts durch die Datenübertragungseinheit mit der zweiten Funktechnologie.

14. Verfahren zum Orten von mobilen Sende-Empfangsgeräten (104, 220) mit einem Ortungssystem (100, 200) nach Anspruch 13, wobei der dem Identifikationskode des mobilen Sende-Empfangsgeräts (104, 220) zugeordnete Wert eine Netzwerkkartenadresse oder eine Netzwerkadresse des mobilen Sende-Empfangsgeräts (104, 220) enthält und sowohl das mobile (104, 220) als auch das ortsfeste Sende-Empfangsgerät (102, 202) eine Netzwerkadresse in einem Netzwerk der zweiten Funktechnologie und eine Netzwerkkartenadresse besitzen und das Verfahren zwischen Schritt iii) und iv) weiterhin den Schritt enthält:
iii a)Zuordnen zum Identifikationskode des mobilen Sende-Empfangsgeräts der Netzwerkkartenadresse und der Netzwerkadresse des mobilen Sende-Empfangsgeräts durch das ortsfeste Sende-Empfangsgerät als dem Identifikationskode des mobilen Sende-Empfangsgeräts zugeordneter Wert,
und weiterhin zwischen Schritt iv) und v) die Schritte enthält:
iv a)Empfangen des Identifikationskodes des ortsfesten Sende-Empfangsgeräts und des dem Identifikationskode des mobilen Sende-Empfangsgerät zugeordneten Wertes durch die Datenübertragungseinheit,
iv b)Aussenden des Identifikationskodes des ortsfesten Sende-Empfangsgeräts durch die Datenübertragungseinheit mit der zweiten Funktechnologie an die Netzwerkadresse des mobilen Sende-Empfangsgerätes.

15. Verfahren zum Orten von mobilen Sende-Empfangsgeräten mit einem Ortungssystem nach Anspruch 12, wobei das Verfahren, anstatt den Schritten iii) und iv), die Schritte umfasst,
iii) Empfangen des Identifikationskodes des mobilen Sende-Empfangsgeräts durch das ortsfeste Sende-Empfangsgerät in einem Nachrichtensignal,
iii a) Messen der Signalstärke des Nachrichtensignals durch das ortsfeste Sende-Empfangsgerät,
iii b) Berechnen eines Entfernungswertes zwischen ortsfestem und mobilen Sende-Empfangsgerät anhand der gemessenen Signalstärke durch das ortsfeste Sende-Empfangsgerät, und
iv) Aussenden eines das ortsfeste Sende-Empfangsgerät charakterisierenden Identifikationskodes und eines dem Identifikationskode des mobilen Sende-Empfangsgerät zugeordneten Wertes und des berechneten Entfernungswertes durch das ortsfeste Sende-Empfangsgerät mit der zweiten Funktechnologie.

16. Computerprogrammprodukt mit einem auf einem maschinenlesbaren Datenträger gespeicherten Programmcode zum Einsatz auf einem mobilen Sende-Empfangsgerät (104, 220), welches einen Prozessor, einen Speicher (230) und ein erstes Funkmodul (232) für eine erste Funktechnologie vergleichsweise geringer Reichweite und ein zweites Funkmodul (238) für eine zweite Funktechnologie vergleichsweise großer Reichweite enthält und ein Display enthalten kann, und auf dem mobilen Gerät (104, 220), wenn der Programmcode geladen wird, folgende Schritte ausführt:
Auf der Systemsteuerungsebene:
1. Aktivieren des ersten Funkmoduls in den Modus "dedizierte Identifikationsabfragen von extern von ortsfesten Sende-Empfangsgeräten zu suchen und mit einem das mobile Sende-Empfangsgerät charakterisierenden Identifikationskode beantworten",
**gekennzeichnet durch** die Schritte:
Auf der Systemsteuerungsebene:
2. Aktivieren des zweiten Funkmoduls in den Modus "Empfangen von an das mobile Gerät adressierten Nachrichten und weiterleiten der adressierten Nachrichten an eine Anwendungsebene und versenden von Nachrichten, die von der Anwendungsebene versendet werden".
Auf der Anwendungsebene:
1. Entgegennehmen von adressierten Nachrichten vom zweiten Funkmodul von der Systemsteuerungsebene,
2. Extrahieren eines Identifikationskodes aus einer adressierten Nachricht, wenn die Nachricht einen Identifikationskode enthält,

## Claims

1. Positioning system (100, 200) for determining a position of at least one mobile transceiver (104, 220), wherein the positioning system (100, 200) comprises in addition to the mobile transceiver (104, 220) at least one local transceiver (102, 202) which is configured to be in a predefined position (118) during operation,
wherein both the local (102, 202) and the mobile transceiver (104, 220) comprise both a first radio module (210, 232) for a first radio technology with a comparatively short range and a second radio module (204, 238) for a second radio technology with a comparatively long range and a control unit connected to the radio modules (204, 210; 232, 238) and are configured to communicate via the first radio technology and via the second radio technology and
the local transceiver (102, 202) is configured to transmit via the first radio technology continual query signals (108) to query a respective identification code of the mobile transceiver (104, 220),
the mobile transceiver (104, 220) is configured to receive the query signals (108) and
to send an identification code characterising the mobile transceiver (104, 220) via the first radio technology immediately after receiving at least one query signal (108), and
the local transceiver (102, 202) is configured to receive the identification code via the first radio technology,
**characterised in that**
the local transceiver (102, 202) is configured after receiving the identification code of the mobile transceiver (104, 220) to transmit logically at least one identification code characterising the local transceiver (102, 202) via the second radio technology to the mobile transceiver (104, 220).

2. Positioning system (100, 200) according to claim 1, which in addition comprises at least one data transmitting unit (110) different from the transceivers (102, 202; 104, 220) for the wireless transmission of data, which is configured to communicate with the second radio technology, wherein the local transceiver (102, 202) is configured on receiving the identification code of the mobile transceiver (104, 220) to transmit the identification code characterising the local transceiver (102, 202) via the second radio technology to the data transmitting unit (110), wherein the data transmitting unit (110) is used as the master and the local (102, 202) and the mobile transceiver (104, 220) as the clients.

3. Positioning system (100, 200) according to claim 2, wherein both the local (102, 202) and the mobile transceiver (104, 220) within the second radio technology have a clear network card address and a network address and the local transceiver (102, 202) is configured to convert the identification code of the mobile transceiver (104, 220) into its network address and an associated network address of the mobile transceiver (104, 220) and
to send the identification code of the local transceiver (102, 202) and the network address of the mobile transceiver (104, 220) via the second radio technology to the data transmitting unit (110) which is configured to transmit by means of the network address of the mobile transceiver (104, 220) the identification code of the local transceiver (102, 202) to the mobile transceiver (104, 200).

4. Positioning system (100, 200) according to claim 3, wherein the data transmitting unit (110) is a wireless network access point (WLAN access point).

5. Positioning system (100, 200) according to one of claims 2 to 4, which comprises a data processing system (116) which is connected to the data transmitting unit (110) and comprises retrievable position-specific data, wherein the mobile transceiver (104, 220) is configured with reference to the identification code of the local transceiver (102, 202) received by the second radio technology to retrieve the position-specific data via the second radio technology from the data processing system (116) via the data transmitting unit (110) and
the data processing system (116) is configured at the request of the mobile transceiver (104, 220) to transmit position-specific data via the data transmitting unit (110) to the mobile transceiver (104, 220).

6. Positioning system (100, 200) according to claim 3 or 4, wherein the data transmitting unit (110) is connected to a data processing system (116), which comprises retrievable data, which can be retrieved respectively via an identification code of a local transceiver (102, 202), wherein the mobile transceiver (104, 220) is configured in a request by the second radio technology for position-specific data to transmit the identification code of the local transceiver (102,202) via the data transmitting unit (110) to the data processing system (116),
wherein the data processing system (116) is also configured to receive the network address of the mobile transceiver (104, 220) and the identification code of the local transceiver (102, 202) from the data transmitting unit (110) and to assign data saved in the data processing system (116) specific for the identification code of the local transceiver (102, 202) and to transmit it to the mobile transceiver (104, 220) by means of the network address of the mobile transceiver (103, 220) via the data transmitting unit (110).

7. Positioning system (100, 200) according to claim 3 or 4, wherein the data transmitting unit (110) is connected to a data processing system (116),
and the mobile transceiver (104, 220) is configured, to assign with reference to the identification code of the local transceiver (102, 202) position-specific data and to transmit a query for the position-specific data via the data transmitting unit (110) to the data processing system (116),
which is configured to receive the network address of the mobile transceiver (104, 220) and the query of the mobile transceiver (104, 220) according to the position-specific data from the data transmitting unit (110)
and to transmit the position-specific data saved in the data processing system (116) to the mobile transceiver (104, 220) by means of the network address of the mobile transceiver (104, 220) via the data transmitting unit (110).

8. Positioning system (100,200) according to claim 3 or 4, wherein the control unit of the mobile transceiver (104, 220) comprises a memory (230) in which identification codes of local transceivers (102, 202) assigned to spatial positions are saved and the control unit is configured to assign a spatial position to the received identification code of the local transceiver (102, 202).

9. Positioning system (100, 200) according to claim 3, wherein the local transceiver (102, 202) is configured to send the identification code of the mobile transceiver (104, 220) to the data processing system (116) via the data transmitting unit (110) and
with reference to the identification code of the mobile transceiver (104, 220) to retrieve a network card address and an assigned network address of the mobile transceiver (104, 220) via the data transmitting unit (110) from the data processing system (116),
which is configured to assign the received identification code of the mobile transceiver (104, 220) to the network card address and the associated network address and transmit it via the data transmitting unit (110) to the local transceiver (102, 220).

10. Positioning system (100, 200) according to one of claims 5, 6 or 7, wherein the data processing system (116) comprises a radio module for the second radio technology and is connected only wirelessly to the data transmitting unit (110).

11. Positioning transceiver for use as a local positioning transceiver (102, 202) in a prespecified location for locating mobile transceivers (104, 220), which comprises a first radio module (210) for transmitting and receiving using a first radio technology having a comparatively short transmission and receiving range and a second radio module (204) for transmitting and receiving using a second radio technology having a comparatively long range and a control unit and the control unit is connected to the first and the second radio module, wherein
the positioning transceiver is configured to communicate via the first radio technology and via the second radio technology and
to transmit via the first radio module (210) with the first radio technology continual query signals for querying identification codes of mobile transceivers (104, 200),
wherein the queries cause a mobile transceiver (104, 220) entering into the radio range of the first radio technology of the positioning transceiver to send its identification code via the first radio technology to the positioning transceiver and
the positioning transceiver is configured to receive the identification code via the first radio module (210) with the first radio technology,
**characterised in that**
the positioning transceiver is configured to transmit logically to the mobile transceiver (104, 220) immediately after receiving the identification code of the mobile transceiver (104, 220) an identification code characterising the local transceiver (102,202) via the second radio module (206) with the second radio technology.

12. Method for positioning mobile transceivers (104, 220) with a positioning system (100, 200) which comprises at least one local transceiver (102, 202), wherein both the local transceiver (102, 202) and the mobile transceiver (104, 220) can communicate both with a first radio technology having a comparatively short range and a second radio technology having a comparatively long range, comprising the steps:
i) continually sending out query signals via the first radio technology (302) for querying an identification code of the mobile transceiver via the local transceiver and receiving at least one query signal (402, 404) by the mobile transceiver,
ii) replying by sending out the identification code of the mobile transceiver via the first radio technology (406) after receiving at least one query signal (404) of the local transceiver by the mobile transceiver,
iii) receiving the identification code of the mobile transceiver (304, 306) by the local transceiver,
**characterised by** the steps:
iv) sending out an identification code characterising the local transceiver and a value assigned to the identification code of the mobile transceiver by the local transceiver with the second radio technology (310),
v) receiving the identification code of the local transceiver by the mobile transceiver with the second radio technology (408).

13. Method for positioning mobile transceivers (104, 220) with a positioning system (100, 200) according to claim 12, wherein the positioning system (100, 200) also comprises a data transmitting unit (110) and the method also comprises between step iv) and v) the steps:
iv a) receiving the identification code of the local transceiver and the value assigned to the identification code of the mobile transceiver by the data transmitting unit,
iv b) transmitting the identification code of the local transceiver by the data transmitting unit with the second radio technology.

14. Method for positioning mobile transceivers (104, 220) with a positioning system (100,200) according to claim 13, wherein the value assigned to the identification code of the mobile transceiver (104, 220) comprises a network card address or a network address of the mobile transceiver (104, 220) and both the mobile (104, 220) and also the local transceiver (102, 202) have a network address in a network of the second radio technology and a network card address and the method also comprises between step iii) and iv) the step:
iii a) assigning the network card address and the network address of the mobile transceiver to the identification code of the mobile transceiver by the local transceiver as the value assigned to the identification code of the mobile transceiver, and also between step iv) and v) the steps:
iv a) receiving the identification code of the local transceiver and the value assigned to the identification code of the mobile transceiver by the data transmitting unit,
iv b) transmitting the identification code of the local transceiver by the data transmitting unit with the second radio technology to the network address of the mobile transceiver.

15. Method for positioning mobile transceivers with a positioning system according to claim 12, wherein the method comprises, instead of steps iii) and iv), the steps
iii) receiving the identification code of the mobile transceiver by means of the local transceiver in a message signal,
iii a) measuring the signal strength of the message signal by the local transceiver,
iii b) calculating a distance value between the local and mobile transceiver by way of the measured signal strength by the local transceiver and
iv) emitting an identification code characterising the local transceiver and a value assigned to the identification code of the mobile transceiver and the calculated distance by means of the local transceiver and with the second radio technology.

16. Computer program product with a program code saved on a machine-readable data carrier for use on a mobile transceiver (104, 220), which comprises a processor, a memory (230) and a first radio module (232) for a first radio technology with a comparatively short range and a second radio module (238) for a second radio technology with a comparatively long range and can comprise a display, and on the mobile device (104, 220) when the program code is loaded performs the following steps:
on the system control plane:
1. activating the first radio module into the mode "search for dedicated identification queries externally from local transceivers and respond with an identification code characterising the mobile transceiver",
**characterised by** the steps:
on the system control plane:
2. activating the second radio module into the mode "receive messages addressed to the mobile device and forward the addressed messages to an application plane and send messages which are sent from the application plane",
on the application plane:
1. receive addressed messages from second radio module of system control plane,
2. extract an identification code from an address message when the message comprises an identification code.

## Revendications

1. Système (100, 200) de localisation pour la détermination d'une position d'au moins un appareil (104, 220) émetteur-récepteur mobile, le système (100, 200) de localisation comportant, outre l'appareil (104, 220) émetteur-récepteur mobile, au moins un appareil (102, 202) émetteur-récepteur fixe, qui est constitué pour être en fonctionnement en un lieu (118) déterminé à l'avance,
dans lequel tant l'appareil (102, 202) émetteur-récepteur fixe qu'également l'appareil (104, 220) émetteur-récepteur mobile comportent tant un premier module (210, 232) radio, pour une première technologie radio de portée comparativement petite, qu'également un deuxième module (204, 238) radio, pour une deuxième technologie radio de portée comparativement grande, et une unité de commande, qui est reliée aux modules (204, 210; 232, 238) radio, et sont constitués pour communiquer tant par la première technologie radio qu'également par la deuxième technologie radio, et
l'appareil (102, 202) émetteur-récepteur fixe est constitué pour émettre, par la première technologie radio, continuellement des signaux (108) d'interrogation pour demander un code d'identification respectif de l'appareil (104, 220) émetteur-récepteur mobile,
l'appareil (104, 220) émetteur-récepteur mobile est constitué pour recevoir les signaux (108) d'interrogation et
pour émettre, par la première technologie radio, immédiatement après la réception d'au moins un signal (108) d'interrogation, un code d'identification caractérisant l'appareil (104, 220) émetteur-récepteur mobile, et
l'appareil (102, 202) émetteur-récepteur fixe est constitué pour recevoir le code d'identification par la première technologie radio,
**caractérisé en ce que**
l'appareil (102, 202) émetteur-récepteur fixe est constitué pour, après la réception du code d'identification de l'appareil (104, 220) émetteur-récepteur mobile, transmettre, logiquement par la deuxième technologie radio à l'appareil (104, 220) émetteur-récepteur mobile, au moins un code d'identification caractérisant l'appareil (102, 202) émetteur-récepteur fixe.

2. Système (100, 200) de localisation suivant la revendication 1, qui comporte, pour la transmission sans fil de données, en outre, au moins une unité (110) de transmission de données différente des appareils (102, 202; 104, 220) émetteur-récepteur, unité qui est constituée pour communiquer par la deuxième technologie radio, l'appareil (102, 202) émetteur-récepteur fixe étant constitué pour, à la réception du code d'identification de l'appareil (104, 220) émetteur-récepteur mobile, transmettre, par la deuxième technologie radio, à l'unité (110) de transmission de données, le code d'identification caractérisant l'appareil (102, 202) émetteur-récepteur fixe, l'unité (110) de transmission de données étant utilisée comme maître et l'appareil (102, 202 émetteur-récepteur fixe ainsi que l'appareil (104, 220) émetteur-récepteur mobile comme clients.

3. Système (100, 200) de localisation suivant la revendication 2, dans lequel tant l'appareil (102, 202) émetteur-récepteur fixe qu'également l'appareil (104, 220) émetteur-récepteur mobile ont, au sein de la deuxième technologie radio, une adresse univoque de carte de réseau et une adresse de réseau et l'appareil (102, 202) émetteur-récepteur fixe est constitué pour transformer le code d'identification de l'appareil (104, 220) émetteur-récepteur mobile en son adresse de carte de réseau et en une adresse de réseau associée de l'appareil (104, 220) émetteur-récepteur mobile et
pour émettre, par la deuxième technologie radio, à l'unité (110) de transmission de données, le code d'identification de l'appareil (102, 202) émetteur-récepteur fixe et l'adresse de réseau de l'appareil (104, 220) émetteur-récepteur mobile, l'unité (110) de transmission de données étant constituée,
pour transmettre à l'appareil (104, 220) émetteur-récepteur mobile, au moyen de l'adresse de réseau de l'appareil (104, 200) émetteur-récepteur mobile, le code d'identification de l'appareil (102, 202) émetteur-récepteur fixe.

4. Système (100, 200) de localisation suivant la revendication 3, dans lequel l'unité (110) de transmission de données est un point d'accès à un réseau sans fil (WLAN Acces Point).

5. Système (100, 200) de localisation suivant l'une des revendications 2 à 4, qui comporte une installation (116) de traitement de données, qui est reliée à l'unité (110) de transmission de données et qui contient des données spécifiques au lieu et pouvant être appelées, l'appareil (104, 220) émetteur-récepteur mobile étant constitué pour appeler, par la deuxième technologie radio de l'installation (116) de traitement de données, en passant par l'unité (110) de transmission de données, au moyen du code d'identification reçu par la deuxième technologie radio de l'appareil (102, 22) émetteur-récepteur fixe, les données spécifiques au lieu et
l'installation (116) de traitement de données est constituée, pour transmettre à l'appareil (104, 220) émetteur-récepteur mobile par l'unité (110) de transmission de données, sur demande de l'appareil (104, 220) émetteur-récepteur mobile, des données spécifiques au lieu.

6. Système (100, 200) de localisation suivant la revendication 3 ou 4, dans lequel l'unité (110) de transmission de données est reliée à une installation (116) de traitement de données, qui contient des données qui peuvent être appelées et qui peuvent être appelées respectivement par un code d'identification d'un appareil (102, 202) d'émetteur-récepteur fixe, l'appareil (104, 220) émetteur-récepteur mobile étant constitué pour transmettre à l'installation (116) de traitement de données par l'unité (110) de transmission de données, au sein d'une demande par la deuxième technologie radio de données spécifiques au lieu, le code d'identification de l'appareil (102, 202) émetteur-récepteur fixe,
dans lequel l'installation (116) de traitement de données est constituée, en outre, pour recevoir de l'unité (110) de transmission de données l'adresse de réseau de l'appareil (104, 220) émetteur-récepteur mobile et le code d'identification de l'appareil (102, 202) émetteur-récepteur fixe et associer des données mémorisées dans l'installation (116) de traitement et spécifiques au code d'identification de l'appareil (102, 202) émetteur-récepteur fixe et les transmettre, par l'unité (110) de transmission de données, à l'appareil (104, 220) émetteur-récepteur mobile au moyen de l'adresse de réseau de l'appareil (104, 220) émetteur-récepteur mobile.

7. Système (100, 200) de localisation suivant la revendication 3 ou 4, dans lequel l'unité (110) de transmission de données est raccordée à une installation (116) de traitement de données,
et l'appareil (104, 220) émetteur-récepteur mobile est constitué pour associer des données spécifiques au lieu au moyen du code d'identification de l'appareil (102, 202) émetteur-récepteur fixe et pour transmettre une demande de données spécifiques au lieu à l'installation (116) de traitement de données par l'unité (110) de transmission de données,
l'installation (116) étant constituée pour recevoir de l'unité (110) de transmission de données l'adresse de réseau de l'appareil (104, 220) émetteur-récepteur mobile et la demande de données spécifiques au lieu par l'appareil (104, 220) émetteur-récepteur mobile,
et pour transmettre, par l'unité (110) de transmission de données à l'appareil (104, 220) émetteur-récepteur mobile, au moyen de l'adresse de réseau de l'appareil (104, 220) émetteur-récepteur mobile par l'unité (110) de transmission de données, les données spécifiques au lieu mémorisées dans l'installation (116) de traitement de données.

8. Système (100, 200) de localisation suivant la revendication 3 ou 4, dans lequel l'unité de commande de l'appareil (104, 220) émetteur-récepteur mobile comporte une mémoire (230), dans laquelle sont mémorisés, de manière associée à des positions dans l'espace, des codes d'identification d'appareils (102, 202) émetteur-récepteur fixes et l'unité de commande est constituée pour associer une position dans l'espace au code d'identification reçu de l'appareil (102, 202) émetteur-récepteur fixe.

9. Système (100, 200) de localisation suivant la revendication 3, dans lequel l'appareil (102, 202) émetteur-récepteur fixe est constitué pour émettre, vers l'installation (116) de traitement de données en passant par l'unité (110) de transmission de données, le code d'identification de l'appareil (104, 220) émetteur-récepteur mobile et
pour appeler (116), au moyen du code d'identification de l'appareil (104, 220) émetteur-récepteur mobile, une adresse de carte de réseau et une adresse de réseau associée de l'appareil (104, 220) émetteur-récepteur mobile,
l'installation de traitement de données étant constituée pour associer le code d'identification reçu de l'appareil (104, 220) émetteur-récepteur mobile à l'adresse de carte de réseau et à l'adresse de réseau associée et pour le transmettre à l'appareil (102, 220) émetteur-récepteur fixe par l'unité (110) de transmission de données.

10. Système (100, 200) de localisation suivant l'une des revendications 5, 6 ou 7, dans lequel l'installation (116) de traitement de données comporte un module radio pour la deuxième technologie radio et est reliée exclusivement sans fil à l'unité (110) de transmission de données.

11. Appareil émetteur-récepteur de localisation à utiliser comme appareil (102, 202) émetteur-récepteur de localisation fixe en un lieu déterminé à l'avance pour la localisation d'appareils (104, 220) émetteur-récepteur mobiles, qui comporte un premier module (210) radio d'émission et de réception par une première technologie radio de portée comparativement petite ou de portée de réception et un deuxième module (204) radio d'émission et de réception par une deuxième technologie radio de portée relativement grande et une unité de commande et l'unité de commande est reliée au premier et au deuxième modules radio, dans lequel
l'appareil émetteur-récepteur de localisation est constitué pour communiquer par la première technologie radio et par la deuxième technologie radio et
pour émettre, par le premier module (210) radio par la première technologie radio, continuellement des signaux d'interrogation pour demander des codes d'identification d'appareils (104, 200) émetteur-récepteur mobiles,
dans lequel les interrogations font qu'un appareil (104, 220) émetteur-récepteur mobile entrant dans la portée radio de la première technologie radio de l'appareil émetteur-récepteur de localisation envoie son code d'identification par la première technologie radio à l'appareil émetteur-récepteur de localisation, et
l'appareil émetteur-récepteur de localisation est constitué pour recevoir le code d'identification par le premier module (210) radio par la première technologie radio,
**caractérisé en ce que**
l'appareil émetteur-récepteur de localisation est constitué pour, immédiatement après la réception du code d'identification de l'appareil (104, 220) émetteur-récepteur mobile, transmettre, par le deuxième module (206) radio par la deuxième technologie radio logiquement à l'appareil (104, 220) émetteur-récepteur mobile, un code d'identification caractérisant l'appareil (102, 202) émetteur-récepteur fixe.

12. Procédé de localisation d'appareils (104, 220) émetteur-récepteur mobiles par un système (100, 200) de localisation qui comporte au moins un appareil (102, 202) émetteur-récepteur fixe, dans lequel tant l'appareil (102, 202) émetteur-récepteur fixe qu'également l'appareil (104, 220) émetteur-récepteur mobile peuvent communiquer tant par une première technologie radio de portée comparativement petite qu'également par une deuxième technologie radio de portée comparativement grande, comprenant les stades :
i) émission en continu de signaux d'interrogation par la première technologie (302) radio pour la demande d'un code d'identification de l'appareil émetteur-récepteur mobile par l'appareil émetteur-récepteur fixe et réception d'au moins un signal (402, 404) d'interrogation par l'appareil émetteur-récepteur mobile,
ii) réponse par l'appareil émetteur-récepteur mobile par émission du code d'identification de l'appareil émetteur-récepteur mobile par la première technologie (406) radio après réception d'au moins un signal (404) d'interrogation de l'appareil émetteur-récepteur fixe,
iii) réception du code d'identification de l'appareil (304, 306) émetteur-récepteur mobile par l'appareil émetteur-récepteur fixe,
**caractérisé par** les stades :
iv) envoi par l'appareil émetteur-récepteur fixe par la deuxième technologie radio (310) d'un code d'identification caractérisant l'appareil émetteur-récepteur fixe et d'une valeur associée au code d'identification de l'appareil émetteur-récepteur mobile,
v) réception du code d'identification de l'appareil émetteur-récepteur fixe par l'appareil émetteur-récepteur mobile par la deuxième technologie radio (408).

13. Procédé de localisation d'appareils (104, 220) émetteur-récepteur mobiles par un système (100, 200) de localisation suivant la revendication 12, dans lequel le système (100, 200) de localisation comporte, en outre, une unité (110) de transmission de données et le procédé comporte, en outre, entre le stade iv) et v) les stades :
iv a) réception par l'unité de transmission de données du code d'identification de l'appareil émetteur-récepteur fixe et de la valeur associée au code d'identification de l'appareil émetteur-récepteur mobile,
iv b) envoi du code d'identification de l'appareil émetteur-récepteur fixe par l'unité de transmission de données par la deuxième technologie radio.

14. Procédé de localisation d'appareils (104, 220) émetteur-récepteur mobiles par un système (100, 200) de localisation suivant la revendication 13, dans lequel la valeur associée au code d'identification de l'appareil (104, 220) émetteur-récepteur mobile comporte une adresse de carte de réseau ou une adresse de réseau de l'appareil (104, 220) émetteur-récepteur mobile et tant l'appareil (104, 220) émetteur-récepteur mobile qu'également l'appareil (102, 202) émetteur-récepteur fixe possèdent une adresse de réseau dans un réseau de la deuxième technologie radio et une adresse de carte de réseau et le procédé comporte entre le stade iii) et iv), en outre, le stade :
iii a) association au code d'identification de l'appareil émetteur-récepteur mobile de l'adresse de carte de réseau et de l'adresse de réseau de l'appareil émetteur-récepteur mobile par l'appareil émetteur-récepteur fixe comme valeur associée au code d'identification de l'appareil émetteur-récepteur mobile,
et comporte, en outre, entre le stade iv) et v) les stades :
iv a) réception par l'unité de transmission de données du code d'identification de l'appareil émetteur-récepteur fixe et de la valeur associée au code d'identification de l'appareil émetteur-récepteur mobile,
iv b) envoi du code d'identification de l'appareil émetteur-récepteur fixe par l'unité de transmission de données par la deuxième technologie radio à l'adresse de réseau de l'appareil émetteur-récepteur mobile.

15. Procédé de localisation d'appareils (104, 220) émetteur-récepteur mobiles par un système (100, 200) de localisation suivant la revendication 12, dans lequel le procédé comprend, au lieu des stades iii) et iv), les stades :
iii) réception du code d'identification de l'appareil émetteur-récepteur mobile par l'appareil émetteur-récepteur fixe dans un signal de message,
qui a) mesure de l'intensité du signal de message par l'appareil émetteur-récepteur fixe,
qui b) calcul d'une valeur d'éloignement entre l'appareil émetteur-récepteur fixe et l'appareil émetteur-récepteur mobile au moyen de l'intensité de signal mesurée par l'appareil émetteur-récepteur fixe, et
iv) envoi par l'appareil émetteur-récepteur fixe par la deuxième technologie radio d'un code d'identification caractérisant l'appareil émetteur-récepteur fixe et d'une valeur associée au code d'identification de l'appareil émetteur-récepteur mobile et de la valeur d'éloignement calculée.

16. Produit de programme d'ordinateur comprenant un code de programme mémorisé sur un support de données pouvant être exploité par une machine à utiliser sur un appareil (104, 220) émetteur-récepteur mobile, qui comporte un processeur, une mémoire (230) et premier module (232) radio pour une première technologie radio de portée comparativement petite et un deuxième module (238) radio pour une deuxième technologie radio de portée comparativement grande et qui peut comporter un affichage et qui effectue sur l'appareil (104, 220) mobile, lorsque le code de programme est chargé, les stades suivants :
dans le plan de la commande du système :
1. activation du premier module radio dans le mode "identification dédiée pour la recherche d'appareils émetteur-récepteur fixes de l'extérieur et réponse par un code d'identification caractérisant l'appareil émetteur-récepteur mobile",
**caractérisé par** les stades :
dans le plan de la commande du système :
2. activation du deuxième module radio dans le mode "réception de messages adressés à l'appareil mobile et acheminement des messages adressés à un plan d'application et envoi de messages qui sont envoyés par le plan d'application",
dans le plan d'application :
1. réception de messages adressés par le deuxième module radio à partir du plan de la commande du système,
2. extraction d'un code d'identification d'un message adressé, lorsque le message contient un code d'identification.
